# EUROPEAN PATENT SPECIFICATION

(11) **EP 3 600 980 B1**
(45) Date of publication and mention of the grant of the patent: **18.05.2022**
(21) Application number: 18772277.2
(22) Date of filing: 15.03.2018
(51) Int. Cl.: B60S 13/00, A61G 7/08, B60P 3/12, B62B 5/00, B66F 7/06, B66F 7/28, B66F 9/06, B62B 3/06

(54) **TRANSPORT CART**
TRANSPORTWAGEN
CHARIOT DE TRANSPORT

(30) Priority: 21.03.2017 SE 1750332
(43) Date of publication of application: 05.02.2020
(73) Proprietor: Silver & Stal Enterprises AB, 643 22 Vingåker (SE)
(72) Inventor: SCHÖN, Niklas, 641 34 KATRINEHOLM (SE); LEJONDAHL, Lars-Erik, 120 71 Stockholm (SE)
(74) Representative: Groth & Co. KB
(86) International application number: PCT/SE2018/050254
(87) International publication number: WO 2018/174781

(56) References cited:
- EP-A1- 0 405 230
- WO-A1-99/15346
- GB-A- 2 353 978
- US-A- 3 877 591
- US-A1- 2015 136 498
- US-B2- 8 165 718

## Description

### Technical Field

The present invention relates to the field of electric motor-assisted manual transporters, preferably for the transportation of material in narrow spaces and above all for moving patient beds in hospitals.

### Background of the Invention

In health care, many transports of beds take place with and without patients. The transport may take place long distances and also include upward and downward slopes. This is a heavy work which may entail drawbacks for the transporting person. Not rarely, two operators are required. Since many years, there are transportation aids consisting of motorized drive devices which can be coupled to beds to facilitate these transports.

Some of the existing difficulties of said known drive devices are that the entire carriage is difficult to manoeuvre when it is to be turned around and above all in narrow spaces such as, for instance, lifts or elevators.

In addition, the beds are developed, which involves that they get more technical peripheral equipment which occupy space in the bottom part of the bed and also make more difficult for transportation aids to grip the bed.

The most common coupling of existing transportation aids is to grip the chassis of the bed construction and lift the bed end piece somewhat from the floor. In addition, there are many different bed makes and variants of bed chassis, which entails difficulties to find solutions allowing application of the transportation aid to essentially all beds and stretcher trolleys, etc. This type of transportation aid is seen, for instance, in the following patent documents: EP 1414732, US 6871714.

Another variant to couple the transportation aid to the bed is to take hold of the bed wheels and lift the same somewhat from the floor. The advantage of gripping the wheels is that all beds have wheels and are essentially placed in the same place of the bed. This entails conditions to, with one and the same bed transporter, transport many different bed types. However, there are difficulties that the bed wheels are most often a distance inward from the bed end piece and that in the room between the wheels and up to the bed end piece there are a lot of equipment parts for the bed. This entails that bed transporters should not have any greater "volume" from the gripping position of the wheels to the bed end piece. In addition, the wheel sizes of the beds may vary and that the distance between the end piece wheels varies between different beds types.

By EP 2720662, a lifting and transporting device for hospital beds is known, which grips the bed wheels from the outside after which a vertical lifting of the rear part of the gripping devices is provided for lifting the bed wheels from the floor by a leverage wherein the front wheels abut against the substratum. A problem of this lifting device is that the gripping devices for the bed wheels do not reach sufficiently far in under the patient bed and thereby only can handle a limited number of types of patient beds. A further problem of this lifting device is that beds having a large shaft width cannot be handled since the grippers only grip from the outside

US 2008/0101903 discloses a transportation system for wheeled beds, which comprises shovel-like gripper, which is wobbled for lifting the bed wheels. In this transportation system, only beds having a limited variation of the shaft width are allowed at the same time as the bed has to offer large space for the transporter to reach far under the bed.

US 8165718 discloses a transportation device which can lift, for instance, a patient bed by gripping the wheels from the inside by a first horizontal movement and to displace the bed by a second horizontal movement so as to subsequently lift the bed by a third vertical movement. In this transportation device, the front supporting wheel/wheels of the transporter is/are always located behind the gripper and thereby the bed wheels, which causes a considerably inferior manoeuvrability in narrow spaces such as patient lifts.

WO 2013/156030 discloses a transportation vehicle for the transport of wheeled beds of varying appearance. The patent specification discloses a variant of a gripper provided with an axially displaceable finger for the opening and closure of the wheels of a bed. This finger is in open position transverse, which causes difficulties to reach in under certain types of beds.

US 7594284 discloses a transportation device for a wheel-supported platform wherein the transportation device can lift the platform via its wheels after the wheels have been placed in wheel seats which then are lifted vertically. Important properties for bed transporters are flexibility upon transportation of bed,
small turning radius, short total length to be accommodated in lifts, battery capacity which affords sufficient operating time, and simple charging procedure as well as vigour to manage upward and downward slopes.

US 2015136498A1 discloses a transport cart for moving a bed supported by bed wheels, comprising at least one grip configured to grip a bed wheel, the grip comprising a wheel support plate configured to receive and support a wheel and sided by two wheel fences forming a wheel enclosure closable by a wheel gate facing the wheel support place.

### The Object of the Invention

The object of the present invention is to provide an improved transporter for the transport of wheeled objects than those transporters that are previously known, above all for patient beds.

The object is furthermore that the transporter should have a low profile alternatively slender profile upon gripping at the same time as it should have a small extension longitudinally upon transported "carriage".

In addition, the object is to grip the bed wheels for a steady lifting of the bed upon simultaneous shortening of the carriage.

An object of invention is also to allow for a transporter to grip object wheels from the side.

An object is also to, by such a transporter, in addition obtain a possibility of gripping the bed chassis for such a lifting by a supplementing embodiment.

The invention also aims at providing a transporter which can grip several types of objects than what previously has been possible by on one hand reaching in under several objects and on the other hand be able to grip object wheels either from the outside, from the inside, or straight from behind.

An object of the invention is also to provide an improved manoeuvring of a transporter.

The object of the invention is also, in a grip position of object wheels, to also adapt the grip to the object wheels.

The object of the invention is also to provide a faster, more stable, and more flexible manoeuvring of the driving wheels of the transporter.

### Summary of the Invention

By the present invention, such as this is seen in the independent claims, the above-mentioned objects are met, said disadvantages at existing transporters having been eliminated. Suitable embodiments of the invention are defined in the dependent claims.

Generally, the term "finger" has been used in the description, but with the expression "finger" it should be interpreted to also comprise sheet-metal plates, flat irons, angle-irons, and the like which have the same function as is embraced by the expression "finger" in the description. Also the used term "heel plate" below in the description may correspondingly have varying design.

The term "pull cart" has been used in the sense that this cart intends an object which causes a movement of a wheel fixing device in the longitudinal direction, X-direction, of the transporter. Thus, the term "movement device" may also below be interpreted as such a movement object.

In addition, the term "movement device" is used, which should be interpreted in a wide perspective and may relate to one or more of those parts of the transporter that provide the position and the direction of the finger in relation to the chassis of the transporter.

The invention concerns a transporter comprising a chassis on which at least one rear driving wheel driven by a driving motor is connected and on which chassis at least one front supporting wheel is directly or indirectly fitted. In embodiments, said supporting wheels may be two in number and be fitted for rotation on horizontal shafts situated on each side of an imaginary longitudinal axis of the transporter. The transporter comprises at least one wheel fixing device designed to grip one or more object wheels of an object, for instance a patient bed, transportable by the transporter on a substratum. The wheel fixing device is fitted in the front end of a movement device connected to the chassis. The wheel fixing device is formed with at least one elongate finger, which is movable between an open position and a closed position, so as to, in the closed position, bring the wheel fixing device to a lifting movement, between a vertical lower grip level and a vertical higher elevation level and thereby subject contained object wheels to a lifting and to a possible further move of the object by the transporter. Said finger is provided with a movable end and an end of the movement device mounted around a bearing shaft, which finger is turnably movable on the bearing shaft in a grip movement from the open position to the closed position. The bearing shaft is either an essentially vertically directed seat shaft and/or directed parallel to an essentially horizontally directed operating shaft. The wheel fixing device is movable in the X-direction and in the Y-direction as well as in the Z-direction.

This type of wheel fixing device having a movable finger gives rise to a number of different embodiments of the wheel fixing device according to the following:
A movable finger having a free end. The finger is movable in a horizontal plane and/or in a vertical plane. Upon a horizontal movement, the finger is mounted around a shaft journal. Upon a vertical movement, the finger is rotated by a rotation of a complete shaft 180°. Upon a spherical movement, the movement of the finger is a combination of the two movements. Upon exclusively vertical (180°) movement, the finger may be bolted/welded perpendicular to said shaft.

The finger attachment is movable toward or from the imaginary longitudinal axis of the transporter.

The finger attachment movements may be performed either toward or from each other.

Grip movement/movement of the wheel fixing device between open and closed position. Upon gripping of transverse bed wheels, opening and closure takes place in the same direction.

Grip movement/movement of the wheel fixing device between open/closed takes place toward or from the imaginary longitudinal axis.

Finger in closed position has essentially a position of the finger which is parallel to a heel plate. In said closed position, a contraction is provided to grip the wheel to allow an adaptation between bed wheels of different sizes.

The fingers may have different appearance. Of the kind finger, piece of sheet, finger/sheet-metal plate with bent hook in the end which more or less surrounds the wheel, which affords a better gripping of a bed wheel. Also the heel plate may have different design in a similar way.

It is also possible to form a U-shaped gripping device. This involves that lateral adaptation of the wheel fixing device is made before running in toward the object wheels.

Alternative embodiments also involves that two or more wheel fixing devices with previously mentioned positions are arranged on each lateral end piece. Two basic types may be identified: Heel plate on all/both positions. One or two fingers according to the above. Rotate finger plus heel plate alternatively the gripping means 180°.

The heel plate is situated or has an extension on both sides of the movement device.

The common general idea of the invention with double wheel fixing positions of the movement device is that the positions should be independent of the choice of fingers and instead define two or more grips on the same lateral end piece.

Also with double wheel fixing positions, different finger variants according to the above are feasible. In addition, axial movement for the adaptation of wheel sizes may be combined with double wheel fixing positions.

Alternatively, said finger is provided with alternating two free ends and axially mounted in the movement device for an axial movement in the movement device, which finger is movable in the transverse direction between an open position and a closed position alternately on each side of its mounting in the movement device.

The movement device is movable in a Y-direction for the adaptation of the wheel fixing device to an object wheel, for instance so that the transporter optionally should be able to grip said object wheel laterally, i.e., in the lateral direction in relation to the transporter, either from outside or from within. The movement in the Y-direction also allows that gripping can take place from behind.

In all these finger embodiments, a lifting of an object wheel may be effected immediately after gripping by the movement device being rotated a number of degrees, which effects a lifting before a movement in the X-direction is initiated.

The disclosure also concerns a transporter comprising a chassis on which at least one rear driving wheel driven by a driving motor is connected to the chassis. On the chassis, at least one front supporting wheel is directly or indirectly fitted. The transporter comprises at least one wheel fixing device, designed to grip one or more object wheels of an object, for instance a patient bed, transportable by the transporter on a substratum. The wheel fixing device may also via its grip movement actuate an intermediate object to grip a chassis portion of the object instead of gripping an object wheel. The wheel fixing device is fitted in the front end of a movement device connected to the chassis. The wheel fixing device is manoeuvrable between a gripped position and a detached position, so as to, in the gripped position, bring the wheel fixing device to a lifting movement in the Z-direction, between a vertical lower grip level and a vertical higher elevation level and thereby subject contained object wheels or gripped chassis portions to a lifting and to a possible further move of the object by the transporter on the substratum. Said lifting movement in the Z-direction of the wheel fixing device is effected when the movement device is displaced longitudinally, in the X-direction, in relation to said chassis.

In one example, the wheel fixing device is formed with at least one elongate finger.

In one example, the driving wheel is rotatably movable on a swivel shaft.

In one example, said swivel shaft forms an angle in the range of 5-45°, preferably 15-35°, and most suitably 20°, with a vertical axis through the centre of rotation of the driving wheel to provide a torque on the driving wheel for reversing toward a centre position upon the forward movement of the transporter. Such a reversing torque may be made yet stronger or alternatively be provided by means of a mechanical or hydraulic spring. Also a pneumatic spring or a gas spring may be an alternative.

The disclosure also concerns a transporter comprising a chassis on which at least one rear driving wheel driven by a driving motor is connected to the chassis and rotatably movable on a swivel shaft. On the chassis, at least one front supporting wheel is directly or indirectly fitted for rotation. The transporter comprises at least one wheel fixing device designed to grip one or more object wheels of an object, for instance a patient bed, transportable by the transporter on a substratum. Said swivel shaft forms an angle in the range of 5-45°, preferably 15-35°, and most suitably 20°, with a vertical axis through the centre of rotation of the driving wheel to provide a torque on the driving wheel for the reversal toward a centre position upon the forward movement of the transporter. This embodiment represents steadier driving of the transporter and increased stability.

In one example, the centre of rotation of the driving wheel in the horizontal direction is situated offset in relation to the swivel shaft.

The disclosure also concerns a transporter comprising a chassis on which at least one rear driving wheel driven by a driving motor is connected to the chassis. On the chassis, at least one front supporting wheel is directly or indirectly fitted. The transporter comprises at least one wheel fixing device, designed to grip one or more object wheels of an object, for instance a patient bed, transportable by the transporter on a substratum. The wheel fixing device is fitted in the front end of a movement device movably connected to the chassis. The wheel fixing device is manoeuvrable between a gripped position and a detached position, so as to, in the gripped position, bring the wheel fixing device to a lifting movement, between a vertical lower grip level and a vertical higher elevation level and thereby subject contained object wheels to a lifting and to a possible further move of the object by the transporter. A first abutment means for the abutment against a rear part of the object wheel, for instance a heel plate, and a second abutment means for the abutment against a front part of the object wheel, for instance a finger, are movably connected to the chassis, said first abutment means and said second abutment means being movable in relation to each other. For instance, a finger is moving in relation to a fixed abutment means or the abutment means is moving toward a fixed finger. A further example is that the finger and the abutment means can move in relation to each other. This movement concerns an internal mobility of the wheel fixing device in the X-direction irrespective of whether the finger is turnable according to previously or axially movable to provide an adjustment of the grip in relation to the object wheel. As an alternative to said finger in this embodiment, a fixed support device may replace the finger.

In one example, the movement device is laterally, in a Y-direction, movable in relation to the chassis or movable in relation to parts of the chassis in embodiments having divided chassis.

In one example, the movement device is arranged to displace said finger towards a heel plate related to the chassis, preferably which at sufficient abutment of an object wheel emits a sensor signal.

In one example, the respective heel plate is situated or has an extension on both sides of the respective movement device. This type of heel plate is advantageous since gripping can take place from both sides of the movement device.

In one embodiment of the invention, the grip movement of the finger takes place from open to closed position either in a horizontal plane or in a vertical plane. Also a combination of these movements is contained within the scope of the invention.

In one example, said grip movement from open position to closed position takes place either toward the imaginary longitudinal axis of the transporter or from the imaginary longitudinal axis of the transporter.

In one embodiment of the invention, an operating rod is connected to said finger and axially displaceable along the operating shaft to hold, in a first axial position, said finger in its open position and to hold, in a second axial position, said finger in its closed position.

In one example, the movement device with the wheel fixing device is movable in the X-direction along a movement track. This movement in the X-direction also gives rise to a movement of the wheel fixing device in the Z-direction upon the lifting that takes place.

In one example, said movement track is movable in a Y-direction in relation to the chassis or to parts of the chassis.

In one example, the movement device with the wheel fixing device is fitted to a movable pull cart on the transporter to effect said lifting movement and thereby a move of the wheel fixing device in relation to the chassis of the transporter between said lower grip level and said higher elevation level. The pull cart is formed with devices to grip an object wheel.

In one example, said chassis is provided with a first runner and a second runner designed to form, in a vertical plane, said movement track along which, for instance, the pull cart is movable. Thus, the movement track is the movement that the wheel fixing device performs from their front lower position to their rear, alternatively upper, position. Thus, in this embodiment a pull cart is not required.

In one example, the transporter is provided with operator's device on one hand for steering the transporter and on the other hand for the manoeuvring of the movements of the transporter, of the fingers, and of the pull cart. Also steering using a so-called joy-stick is conceivable within the scope of the invention.

In one example, two wheel fixing devices are connected to the front part of the transporter, the first wheel fixing device of which is fitted to a first movement device and the second wheel fixing device of which is fitted to a second movement device. Said movement device comprises movements for the wheel fixing device to open and close, to press against and release from a stop as well as to rotate the device. The movements are shown more in detail in the detailed description.

In one example, the distance between the two wheel fixing devices can be adjusted laterally in the Y-direction.

In one example, the distance between the two wheel fixing devices can be adjusted by a shaft device to laterally in the Y-direction displace the wheel fixing devices in relation to the chassis.

In one example, said movement device is arranged to be displaced along a movement track which at least partly extends between on one hand a vertical lower grip level on which the wheel fixing devices from a detached position to a gripped position can grip said object wheels and from a gripped position to a detached position can release said object wheels, and on the other hand a vertical higher elevation level on which the wheel fixing devices are permanently gripped.

According to this example, a cart can move along a gripping device the track tied to the chassis. The chassis may also be partible. The track may be adjustable laterally to follow the lateral movements of the lateral end pieces upon adjustment against the object wheels.

The track may also be designed so that a movement along the track provides an upward angling of the gripping device.

In one example, the movement track is, at least partly between the grip level and the elevation level, either curved in at least one vertical plane and/or at least partly linear in a vertical plane.

In one example, the movement track is, at least in a first part, sloping in relation to the substratum and, at least in a second part, essentially parallel to the substratum.

In one example, said lower grip level consists of a first end position of the pull cart in the first part of the movement track and that the higher elevation level of the pull cart is placed in the second part of the movement track with possibility to stop the pull cart between these two levels.

In one example, each finger is fitted to a first pivot seat angularly movable on a first seat shaft the rotational movement of which pivot seat is effected by an axially movable operating rod, which at its one end is connected to a centre joint in a link lever of a first toggle joint the other end of which link lever is connected to said first pivot seat for the rotation of the same upon an axial movement of the operating rod.

In one example, said operating rod is connected to one end of a second link lever in the centre joint of the first toggle joint, which second link lever in its other end is connected to a second angularly movable pivot seat for a rotational movement in the opposite direction to the first pivot seat on a second seat shaft upon the axial movement of the operating rod.

In one example, the axial movement of the operating rod is depending on the position and movement of the pull cart in relation to the movement track.

In one example, each pivot seat is directly or indirectly mounted in a respective operating rod housing, which is axially movable in relation to the pull cart, to provide a pressing of an object wheel surrounded by fingers towards the pull cart, for instance towards a heel plate fixedly fitted to the movement device or to the pull cart.

In one example, a gripper abuts against the first abutment means as well as against the second abutment means, an angular movement for lifting the gripper toward a vertically situated object portion, for instance a frame part of a patient bed, being effected when said first abutment means and said second abutment means are displaced toward each other. The gripper may be rotatably movably connected to the wheel fixing device, which gripper in a grip position abuts against said finger and which in a lifting position is rotated by said finger by a movement in the X-direction into engagement with a vertically situated object portion, for instance a frame part, for a subsequent lifting of the same. This so-called chassis gripping may be combined with a lateral gripping by a fixed or movable finger. It may also be combined with gripping from behind by a movable finger. It is also possible to use in said finger grippings of double type.

In one example, a further lifting of the gripper is effected by a movement in the X-direction along the movement track.

In one example, the gripper is mounted on a horizontal shaft situated adjacent to the movement device.

In one example, said front supporting wheels are fitted for rotation on horizontal shafts situated on each side of an imaginary longitudinal axis of the transporter.

The wheel fixing device can grip bed wheels of different sizes, particularly having the diameter Ø = 100-230 mm. The transporter can in addition automatically grip beds having different wheel distance, especially with the wheel distance in the range of about 550-900 mm.

Embodiments within the scope of the invention contribute to shorten the entire carriage (transporter + bed), for more flexible driving in narrow spaces.

Embodiments within the scope of the invention embrace flexible solutions where the idea of the design is to be able to handle the majority of beds on the market. These embodiments also embrace a low profile to reach in under a patient bed. Gripping of the bed wheels takes place in front of the front supporting wheel/wheels of the transporter. The lifting of wheels/bed takes place fast, which means a steep lifting path. No details of the transporter are projecting when the bed is moved to a rear position/transportation position. The transporter is sufficiently narrow to be flexible in underground walkways, to pass through door posts, etc. The wheel fixing device/devices can in embodiments grip from two directions i.e., internally and externally and also grip bed wheels from behind. Within the scope of the invention, embodiments are also included wherein the wheel fixing device is modified to lift the bed chassis. Upon transportation, the carriage, transporter, and bed, is short to be flexible in underground walkways, lifts, etc. Also the transporter alone is short without bed for a flexible manoeuvring. The length of the carriage is minimized by the fact that a pulling-up of the bed on the transporter can be accomplished. By this pulling-up, the transporter is shortened. Depending on the suspension axis of the motor is sloping, there is a steadier driving by a reversing torque. This reversing torque may be further improved by one or more springs. By embodiments being provided with longitudinally insertable fingers, a design is allowed which can grip wheel diameters in the range of 100 mm to 230 mm. Furthermore, the disclosure embraces embodiments which are provided with tactile sensors to indicate erroneous or correct alignment of the object wheels in the X-direction and the Y-direction, respectively, i.e., in the longitudinal direction and in the lateral direction, respectively, for a reliable lifting. If one or more sensors are not correctly activated, a fault signal is indicated in order to provide a stable bed gripping. The sensors also means a simple bed gripping by the fact that the sensors sense when object wheels are fixed in the X-direction and in the Y-direction.

The front wheels of the transporter, which are not swivel wheels, reach further in under the bed and will upon manoeuvring of the bed be situated between the front and the rear bed wheels. The centre of the turning radius of the carriage will be between these front wheels of the transporter. The position is approximately in the middle of the entire length of bed with transportation aids and operator. Also this geometry of the transporter affords a more flexible driving of the carriage in narrow spaces.

The transporter is furthermore intended for motor operation and manual steering. For the motor operation, an electric motor having reversing function is arranged, which drives a driving wheel in the rear end of the transporter. Steering takes place by manual power by means of a foldable handle. The driving wheel is fitted as a swivel wheel which can be rotated around a swivel journal in a corresponding way as a castor can be rotated.

The motor wheel/driving wheel turns the bed so that the front wheels of the transportation aid becomes fulcrum, which already has been indicated above.

The invention concerns a transporter comprising a chassis on which a rear driving wheel driven by a driving motor is connected to a vertical swivel journal, which is pivotably fitted on a swivel shaft. Thus, the driving wheel works as a castor. On the chassis, front supporting wheels are fitted for rotation on at least one horizontal shaft. The transporter comprises at least one wheel fixing device which can be opened and close to grip one or more object wheels of a transported object, for instance a patient bed, on a substratum and thereby subject the object via these object wheels to a lifting for further move by the transporter. The lifting device for the object wheels is fitted to a movable pull cart or to a movement device of the transporter for moving the object wheels and thereby the object in relation to the chassis of the transporter. By this design, the desired low profile is obtained in combination with a small extension longitudinally in transports.

In one example, said chassis is provided with a, preferably but not necessarily sloping, movement track along which the pull cart or the movement device can be displaced between at least two end positions.

In one example, one is an upper end position and the other is a lower end position at which parts of the wheel fixing device can abut against the substratum. This example contributes to a decrease of the length of the transporter and of the carriage. Preferably, a lifting of the wheel fixing device is also effected in the lower end position before the reduction movement takes place. This lifting may be effected by a tipping movement or by a certain movement in the X-direction or by a combination of these movements.

In example, said wheel fixing device is open in one end position and closed in the other positions. Thus, this is open only when an object wheel can be rolled in while it in the other positions is closed and preferably also locked.

In one example, said wheel fixing device is provided with a ratchet mechanism which holds said wheel fixing device locked in said other positions.

In one example, parts of the wheel fixing device abut against the substratum in the lower end position. The example, makes it possible to use the substratum for the mechanical control of parts of the wheel fixing device.

In one example, the pull cart is connected to a pull cart motor for moving the pull cart along the movement track. The pull cart motor is manoeuvred from a control panel of the foldable handle.

In one example, the movement track is linear. This example contributes to a lifting of an object and simultaneous move of the object takes place smoothly and under control.

In one example, said lifting is effected by displacement of the pull cart in relation to the chassis of the transporter. The example means that the transporter is pulled in under the object, wherein the total length of the carriage, i.e., transporter + object, will be shorter in the transports.

In one example, the driving motor is connected directly to the driving wheel. This represents a compact and simple driving of the driving wheel.

### Brief Description of the Drawings

Now, the invention will be described in more detail, references being made in connection with the accompanying drawing figures. The drawing figures show only explanatory sketches intended to facilitate the understanding of the invention.
- Figure 1: shows a perspective view from above of a bed transporter according to the invention.
- Figure 2: shows the bed transporter in Figure 1 in perspective view from below.
- Figure 3: shows the bed transporter according to Figure 1 in a top view.
- Figure 4: shows a section A-A according to Figure 3.
- Figure 5a: shows a section C-C according to Figure 3.
- Figure 5b: shows the bed transporter in a lower fetching position.
- Figure 5c: shows a top view of the bed transporter according to Figure 5b.
- Figure 5d: shows a section according to the marking in Figure 5c.
- Figure 5e: shows the bed transporter in a lifting position.
- Figure 5f: shows a corresponding section according to Figure 5c in the lifting position according to Figure 5e.
- Figure 5g: shows the bed transporter in a transportation position.
- Figure 5h: shows a corresponding section according to Figure 5c in the transportation position according to Figure 5g.
- Figure 6: shows a section D-D according to Figure 3.
- Figure 7: shows a side view of the bed transporter.
- Figure 8: shows a section B-B according to Figure 7.
- Figure 9: shows a partial enlargement from Figure 8.
- Figure 10: shows available movements for finger manoeuvring.
- Figure 11: shows an embodiment with closed double finger.
- Figure 12: shows a position with open double finger.
- Figure 13a: shows an embodiment with closed single finger.
- Figure 13b: shows a position with open single finger.
- Figure 14a: shows an opposite gripping position with single finger.
- Figure 14b: shows an open position.
- Figure 15a: shows an alternative finger movement.
- Figure 15b: shows a section E-E according to Figure 15a.
- Figure 16a: shows an alternative finger design for fixed single finger in closed position.
- Figure 16b: shows an open position.
- Figure 16c: shows a section F-F according to Figure 16b.
- Figure 16d: shows an opposite gripping position with a fixed single finger.
- Figure 17a: shows an alternative finger movement in closed/open position.
- Figure 17b: shows the alternative finger movement according to Figure 17a in open/closed position.
- Figure 17c: shows a section G-G according to Figure 17b.
- Figure 18a: shows an alternative wheel fixing device in open position.
- Figure 18b: shows the device in Figure 18a in closed position.
- Figure 19a: shows a further alternative wheel fixing device in open position.
- Figure 19b: shows the device in Figure 19a in closed position.
- Figure 20a: shows yet an alternative wheel fixing device in open position.
- Figure 20b: shows the device in Figure 20a in closed position.
- Figure 21a: shows yet an alternative wheel fixing device in entirely open position.
- Figure 21b: shows the device in Figure 21a in half closed position.
- Figure 21c: shows the device in Figure 21a-b in closed position.
- Figure 22: shows a transporter according to the invention having a supplementing gripper.
- Figure 23: shows the gripper according to Figure 22 in a lower position.
- Figure 24: shows the gripper according to Figure 22 in a gripped position.
- Figure 25: shows the gripper according to Figure 22 in a lifted position.

### Description of the Invention

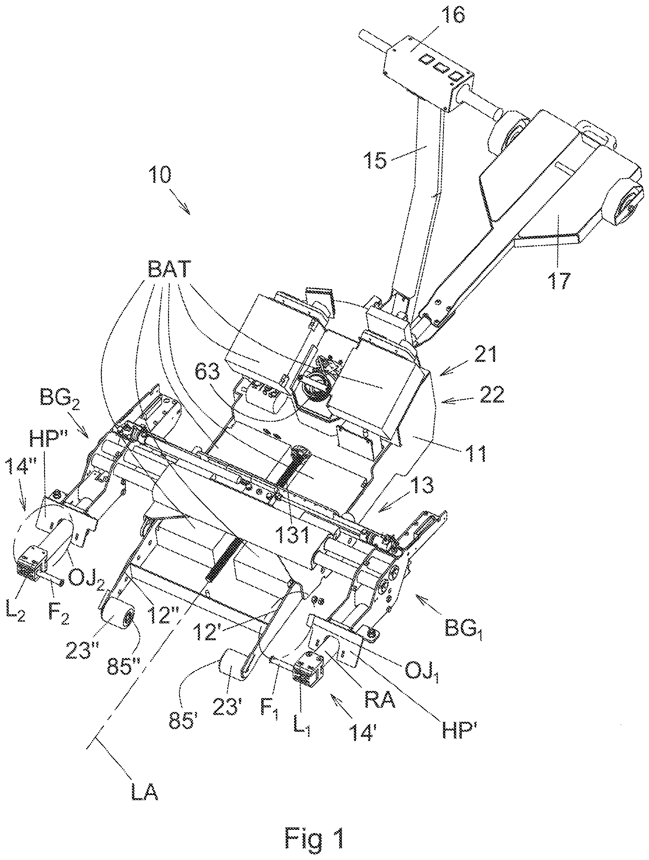

Figure 1 shows an embodiment of the invention in the form of a bed transporter 10 for moving on a substratum. The transporter comprises a chassis 11, which is formed with a sloping movement track 12, which is defined by two runners 12', 12" on which a motor driven pull cart 13 can be displaced in relation to the chassis 11. The pull cart 13 is arranged to be driven by means of a pulling screw 131, oriented parallel to the centrally situated longitudinal axis LA of the transporter, upward and downward along the two runners 12', 12" of the sloping movement track 12 of a pull cart motor, hidden in the figure. The pull cart 13 is provided with two laterally adjustable lateral end pieces BG₁, BG₂ having wheel fixing devices 14', 14".

On the chassis 11 of the transporter, a rear driving wheel 21 is driven by an electric driving motor 22 connected to the chassis 11. The power for the driving motor is collected from a number of batteries BAT placed on the chassis. The driving wheel is rotatably movable on a primarily vertical swivel shaft 63. With the term "primarily", there is meant that the swivel shaft 63 in a neutral position of the driving wheel can have an angle in the range of 5-45°, preferably 15-35°, and most suitably 20° in the range of 0-30° in relation to a vertical axis, and for the embodiment shown, the angle is 20°. On the chassis 11, front supporting wheels 23', 23" are fitted for rotation on horizontal shafts 85', 85" which are situated on each side of an imaginary longitudinal axis LA of the transporter. The transporter 10 is provided with two wheel fixing devices 14', 14" each one designed to grip one or more object wheels OJ₁, OJ₂, which in Figure 1 are indicated by dashdotted ellipses. These object wheels are placed on an object, for instance a patient bed, which is transportable by the transporter 10 and which is moved on a substratum, normally a floor. The wheel fixing devices 14', 14" are fitted to the front end of a movement device RA, which upon a lifting movement in relation to said chassis 11 brings the wheel fixing devices 14', 14" to a movement between a vertical lower grip level, which normally is the level when the object wheels touch the floor, and a vertical higher elevation level to subject the object via these object wheels to a lifting and by the pull cart 13 cause a displacement of the object toward the rear end of the transporter with the purpose of shortening the carriage for further move of the carriage by the transporter 10. The wheel fixing devices 14', 14" are each one formed with one or two elongate fingers F₁, F₂, which each are movable between an open position and a closed position. In Figure 1, two fingers F₁, F₂ are shown, each one fitted to a wheel fixing device in a closed position, each finger having locked an object wheel between the respective finger and a respective heel plate HP', HP". As seen in the figure, the heel plates HP', HP" have a lateral extension on both sides of the respective movement device RA, which means that an object wheel can be locked-in inside as well as outside the movement device RA depending on if the free end of the finger in its closed position points outward or inward. In the figure, the fingers F₁, F₂ point with the free ends thereof toward each other, i.e., inward, in locked position by the fact that they, in their opposite ends, are pivotably mounted in the movement device RA on an essentially vertically oriented bearing shaft L₁, L₂. Thus, the fingers are pivotable essentially 90° in a horizontal plane between the open position and the closed position.

In another embodiment, the fingers may instead be turned from a forwardly pointing open position outward essentially 90° in a horizontal plane to a closed position. In such an embodiment, the object wheels are gripped from the inside.

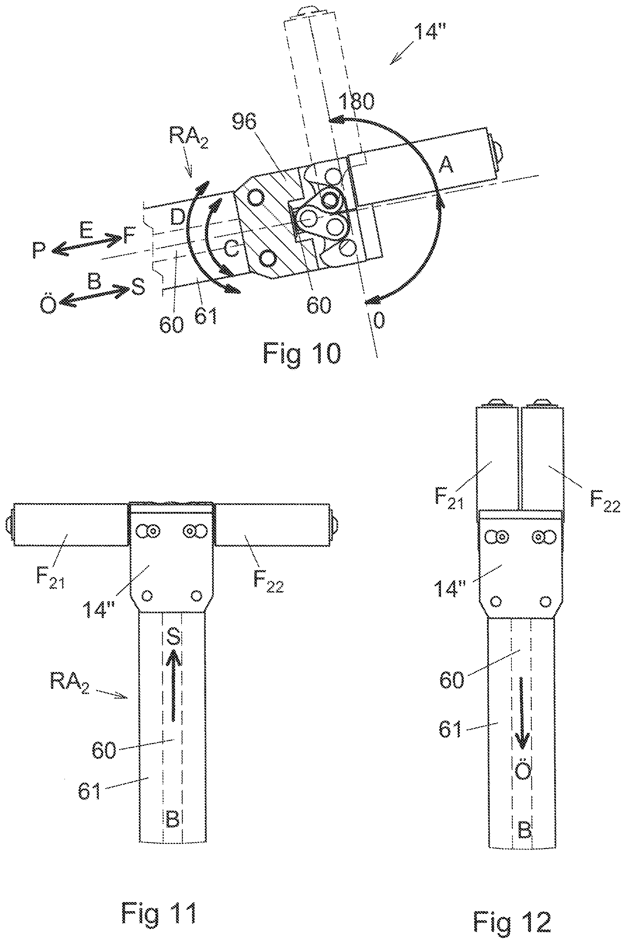

In yet another embodiment, each wheel fixing device 14', 14" can be provided with two fingers F₂₁, F₂₂, see Figures 11 and 12, which upon a closure let one finger F₂₁ be folded essentially 90° in a horizontal plane inward and the other finger F₂₂ be folded essentially 90° in a horizontal plane outward.

The fingers F₂₁, F₂₂ may alternatively be axially movable and mounted in the movement device RA and provided with alternating two free ends. Such fingers are movable in the transverse direction from an open position on the inside of the movement device with a simultaneously closed position on the outside of the movement device to a closed position on the inside of the movement device and a simultaneously open position on the outside of the movement device. Thus, open/closed alternately on each side of the mounting of the finger in the movement device RA.

Also the fingers pivotable on the vertical shafts L₁, L₂ may in the embodiment illustrated simultaneously or alternatively be made pivotable on a horizontal shaft coinciding with the shaft of the movement device RA by the movement device being rotated around its shaft 180° from an inner locked position to an outer locked position. In such an embodiment, an intermediate position corresponding to 90° may constitute an open position.

The transporter is also provided with a foldable operating arm 15, which is connected to the driving wheel 21 for steering the carriage. The operating arm is also provided with a control panel 16 for the regulation of the different functions of the transporter. As accessory, also a travel platform 17 is connected to the control device of the transporter on which travel platform an operator may stand during longer transports. In the embodiments shown, the travel platform is coupled to the control device but the travel platform may alternatively be coupled to the chassis.

The transporter according to Figure 1 is shown with a number of protecting covers/cover caps removed for the sake of clarity.

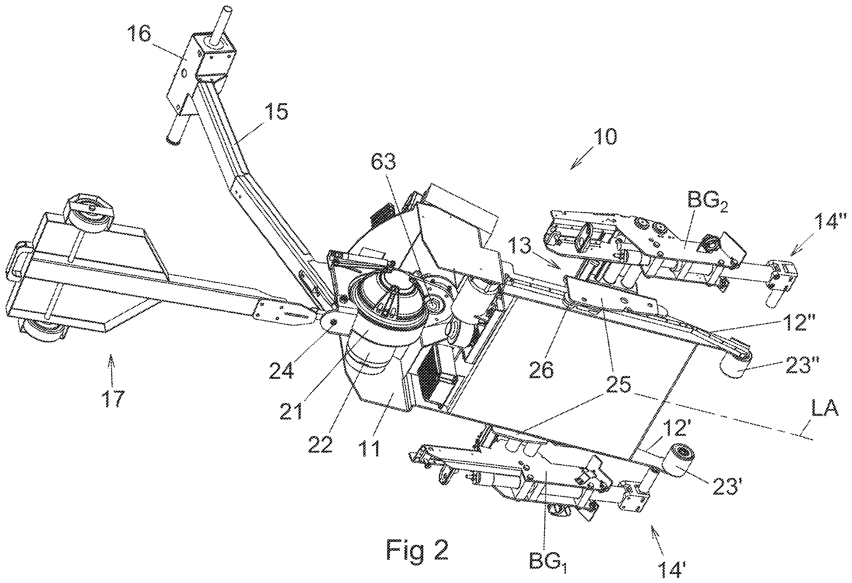

Figure 2 shows the transporter from the under side with the chassis 11 thereof with its lateral end pieces BG₁, BG₂ fitted to the pull cart 13 having the two laterally adjustable wheel fixing devices 14', 14". On the chassis 11 of the transporter, the rear driving wheel 21 is fitted for rotation on the swivel shaft 63. The driving wheel is driven by the driving motor 22, which is connected directly on the driving wheel 21. The rotation is manoeuvred by means of the operating arm 15. When the operating arm 15 is pushed in a direction in operation, also the driving wheel 21 is rotated by this being mounted in the chassis as a castor. The figure also shows the front supporting wheels 23', 23" which are fitted for rotation on a horizontal shaft of the chassis. The supporting wheels are in the embodiment illustrated formed as rollers, which are not castor-suspended.

The travel platform 17 is loosenably coupled to the control device via a platform joint 24.

The pull cart 13 is provided with two guiding end pieces 25 symmetrically placed on each side of the longitudinal axis LA, each one of which guiding end pieces 25 is provided with a number of guide rollers 26 which are in rolling engagement with the two runners 12', 12" placed on the chassis 11 on each side of the longitudinal axis LA. The runners 12', 12" are formed so that the wheel fixing devices 14', 14" of the pull cart 13 in the vertical lower grip level can close around the object wheels so as to, upon displacement of the pull cart 13 rearward, subject the object via these object wheels to a lifting to the vertical, higher elevation level. The runners 12', 12" and thereby the movement track 12 have a shape and an extension longitudinally so as to on one hand allow a shortening of the complete carriage, formed of the transporter and the object, and on the other hand in the initial movement of the pull cart 13 effect a lifting of the object via the object wheels. Preferably, the movement track 12 is formed sloping in relation to the horizontal plane at an initial stage of the movement of the pull cart 13 to level out in the rearward direction. The movement track 12 may also in certain portions have an opposite pitch in the rearward direction.

At the grip level of the wheel fixing devices 14', 14", the transporter is ready to receive, for instance, a patient bed with its wheels, often in the form of guide rollers, which are aligned with the heel plates HP', HP". The entire transporter 10 effects said alignment and upon correct alignment the fingers are brought to closed position after which the fingers are pulled toward the heel plates and press in that connection the bed wheels against the heel plates and the pressure sensors, which indicate correct gripping so that the pull cart 13 can commence to move. The pull cart 13 then commences to be run upward along the movement track 12 and effects a lifting of the patient bed. The continued movement of the pull cart rearward causes a shortening of the carriage.

The transporter 10 is then manoeuvred further using the foldable operating arm 15, which can be folded from a lower manoeuvring position to an upper stop position. In the stop position, the entire bed transporter is locked. On the operating arm, there is a control unit 16 having a speed control, control for driving the pull cart 13 upward and downward, control for lateral adjustment of lateral end pieces BG₁, BG₂, and control for the opening and closure of the wheel fixing devices 14', 14" as well as a pressing of the wheel fixing devices against the heel plates.

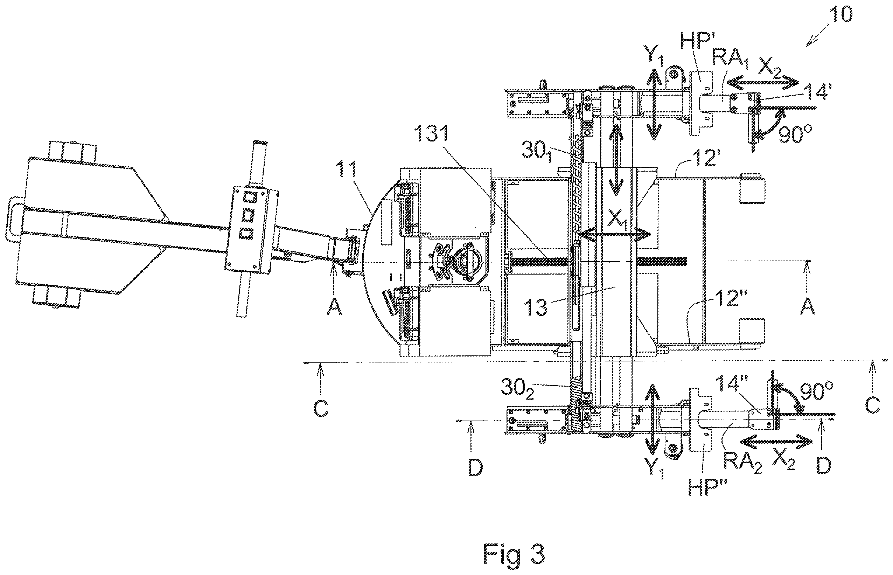

Figure 3 shows the transporter in a view from above with arrows drawn to show the movements of the different parts in relation to the chassis 11 of the transporter.

X₁ shows that the pull cart 13 is movable in the X-direction along the runners 12', 12" of the chassis between a front position and a rear position. This movement is effected by the pulling screw 131 which is connected to the pull cart and which is driven by a pull cart motor.

X₂ shows the movements of the wheel fixing devices 14', 14" between a pressed position of the first device 14' and a non-pressed position of the second device 14". Usually, the X₂- position is equal for the two devices but in order to illustrate the two positions, these have been indicated in the same figure. A pressing of the wheel fixing devices 14', 14" against the respective heel plate HP', HP" takes place when the respective finger has been closed. The movement of the fingers between open position and the closed position in the figure when the fingers point toward each other has been indicated to 90°. Thus, in open position, the fingers point straight forward in this embodiment. A pressed position is different for different wheel sizes.

Y₁ shows the lateral movements for the adjustment of the abutment of the wheel fixing devices 14', 14" against the object wheels, the bed wheels, by the movement devices RA₁, RA₂ being displaceable either from each other or toward each other when a linear motor as a shaft device displaces the movement devices RA₁, RA₂, wherein a synchronization of the movements of the sides takes place via two racks 30₁, 30₂ where one of the racks 30₁ is connected to the movement device RA₁ of one of the sides and the other rack 30₂ is connected to the movement device RA₂ of the other side, wherein the synchronization of the movements of the racks takes place by an intermediate gearwheel. Thus, the shaft device effects a displacement of the two movement devices. When a sufficient pressing has been obtained against the object wheels, a signal is obtained from a side sensor indicating that a correct abutment against the object wheels has been obtained. This signal indicates that the object wheels, which usually are castors, are correctly aligned in relation to the movement devices RA. Within the scope of the invention, there are also embodiments in which the lateral movements of the respective wheel fixing device can be controlled and in that connection be displaced individually in the Y-direction. In connection with these X-movements and Y-movements, it may also be mentioned that movements in the Z-direction occur when the wheel fixing devices lift the object wheels from the substratum. In the transporter shown, this lifting takes place in the Z-direction when the pull cart 13 moves rearward in the X-direction, i.e., toward the left in the figure, along the runners 12' of the chassis.

The figure also shows the extension of the heel plates HP', HP" on both sides of the movement devices RA. The fact that the heel plate has an extension on the outside of the movement devices RA has importance when the movement devices is rotated 180° in relation to the chassis and the gripping of the object wheels instead takes place from the inside.

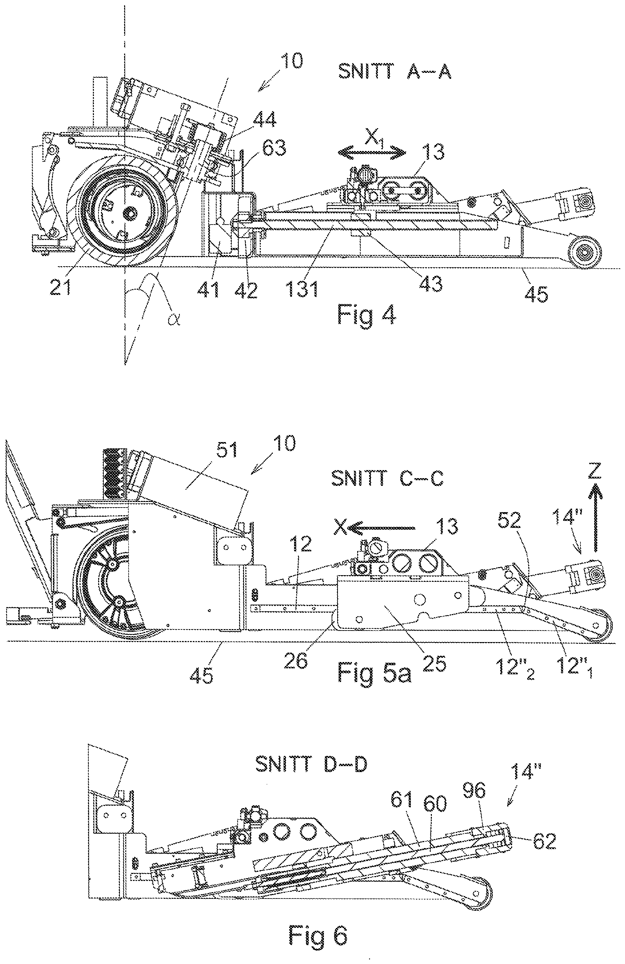

Figure 4 shows in a section A-A according to Figure 3 that the pull cart motor 41 via a gear 42 drives the pulling screw 131, which in turn displaces a carrier 43 connected to the pull cart 13 for a movement of the same in the X-direction, i.e., the movement X₁ according to Figure 3. In the rear end of the transporter 10, the driving wheel 21 is rotatably mounted on the swivel shaft 63, which in a neutral position of the driving wheel forms the angle α, wherein swivel shaft forms an angle in the range of 5-45°, preferably 15-35°, and most suitably 20°, with a vertical line through the contact point against a substratum/floor level 45 for the driving wheel 21. This angle of the swivel shaft 63 causes a reversing torque to a normal position in operation of the transporter. In the embodiment illustrated, this torque is also enhanced by a movement spring 44 which actuates the swivel shaft 63 toward the normal position. The normal position is the position when the transporter is driven straight rearward and straight forward, respectively.

Figure 5a shows in a section C-C the guiding end piece 25 of one of the sides, which by the guiding means 26 thereof leads the pull cart 13 along the runners 12" of the movement track 12. In the embodiment illustrated, a front part 12"₁ of the runners is linearly sloping in the front edge of the transporter 10 for transforming in a rear part 12"2 to be essentially linearly horizontal. This means that the pull cart 13 in a first X-movement, from floor level 45 lifts an object wheel by the wheel fixing devices 14", a movement in the Z-direction, after which the pull cart passes a knee 52 in the movement track, the pull cart being tipped to the horizontal position shown in the figure so that the wheel fixing devices 14" with the object wheels obtain a supplementing instantaneous lifting and/or a better grip of the object wheel and after that a further displacement in the X-direction to obtain a compact carriage, transporter/object.

In the figures shown, in certain cases, protecting covers are in place and in certain cases protecting covers are removed to more clearly show details lying behind. The pitch of the movement track in relation to the floor surface is 10-30°, preferably 15°. The fact that the bed as object is pulled up along the movement track 12 in the X-direction accordingly entails that the combination of bed transporter + patient bed can be made shorter, which is a major advantage in subsequent manoeuvring of the carriage.

The movement track shown in Figure 5a may be formed in other ways, for instance, be made curved without said knee, in other embodiments with what is common to all possible embodiments within the scope of the invention is that an object is lifted in the Z-direction at the front end of the movement track and simultaneously is moved in the X-direction during movement along the movement track.

The chassis also contains chargeable batteries which may be hidden under a chassis casing 51. The batteries, see also Figure 1, drive among other things the driving motor, but also drive the pull cart 13 upward and downward along the movement track 12.

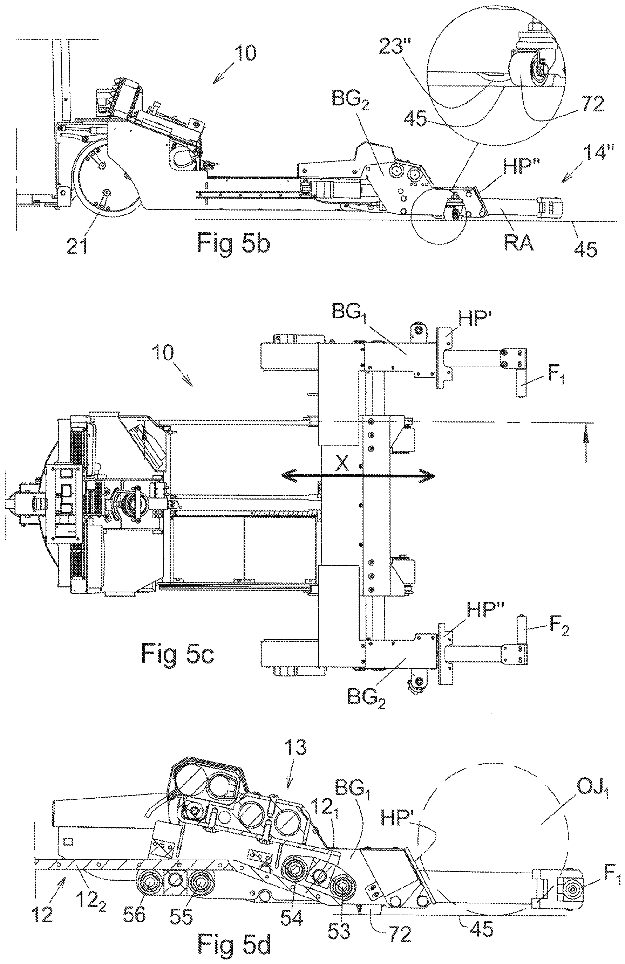

Figure 5b shows the bed transporter 10 with the wheel fixing device 14" thereof in a lower fetching position. The lateral end piece BG₂ with its heel plate HP" and its movement device RA is displaced to a front position, the movement device being essentially parallel to the substratum 45. In this front position, front castors 72 fitted to the lateral end piece BG₂ have been pressed down against the substratum 45 and in that connection lifted up the front supporting wheels 23" from the substratum 45, see the encircled magnification in the figure. In this position, the driving motor is disengaged from the driving wheel 21 and the transporter 10 can very easily be manoeuvred to a suitable gripping position of object wheels.

Figure 5c shows a top view of the bed transporter 10 according to Figure 5b with a marked section line to show the positions of the lateral end pieces BG₁, BG₂ during the movement thereof in the X-direction from a front fetching and gripping position to a transportation position. The heel plates HP', HP" follow the movements of the lateral end pieces BG₁, BG₂ and can be adapted to the closed fingers F₁, F₂ by a mutual movement in relation to each other, for instance, that the fingers are pulled toward the heel plates.

Figure 5d shows the section according to the marking of the section line in Figure 5c. The lateral end piece BG₁ is in a front position and a gripping of an object wheel OJ₁ has been made by the finger F₁ having been manoeuvred to closed position. The front castor 72 rests against the substratum 45, the front supporting wheels being lifted to provide a flexible manoeuvring and adjustment. The lateral end piece BG₁ is in the embodiment illustrated fitted to a pull cart 13, which is movable in the X-direction along a movement track 12, which according to the figure consists of the runners 12₁, 12₂. The pull cart 13 is provided with two front track wheels 53, 54 and two rear track wheels 55, 56 the front ones of which roll on the upper side of the track and the rear ones of which roll on the underside of the track to poise the leverage forces that arise at a lifted object. When the finger has been closed according to the figure, a pull of the finger follows toward the heel plate HP' and a sensor which is connected to the heel plate and which upon sufficient pressing of the object wheel against the heel plate gives a goahead signal for lifting the object.

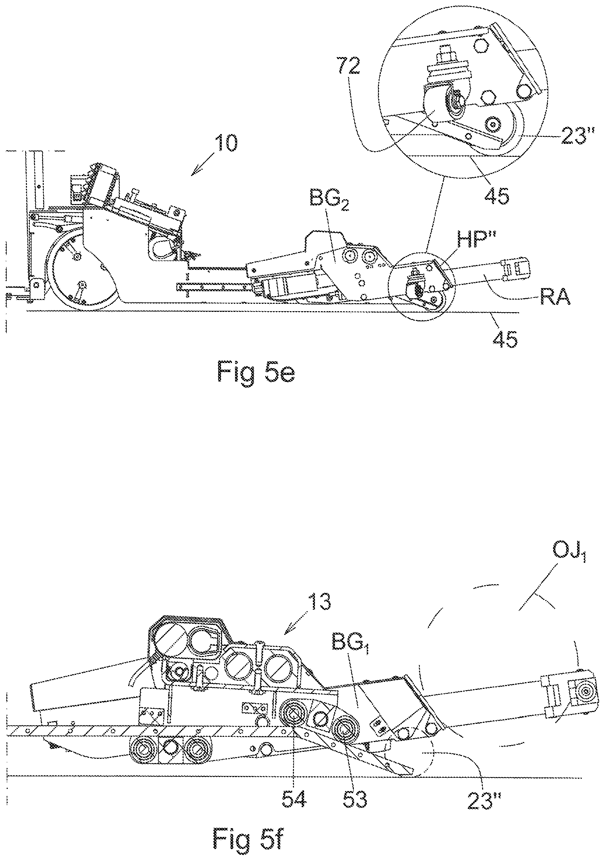

Figure 5e shows the bed transporter 10 in a lifting position. The figure shows that when the lateral end piece BG₂ with its heel plate HP" and its movement device RA has been displaced rearward and by this displacement the movement device has been angled up in relation to the substratum 45, i.e., a lifting has taken place. The magnification in the figure shows that the front castor 72 has been lifted from the substratum 45 and instead it is the front supporting wheel 23" which is contacting the substratum 45. The manoeuvring of the carriage in relation to this front area is now made generally straight forward or generally straight rearward.

Figure 5f shows a corresponding section according to Figure 5c in the lifting position according to Figure 5e. The pull cart 13 has been pulled further rearward and by the fact that the two front track wheels 53, 54 are situated in the upper part of the first sloping runner 12₁, the lateral end piece BG₁ has been angled to a lifting of the object wheel OJ₁. In order to indicate the position of the supporting wheel 23" in relation to the object wheel OJ₁, the supporting wheel has been drawn in using dashed lines. As seen in the figure, the assembled carriage, transporter with object, is relatively long.

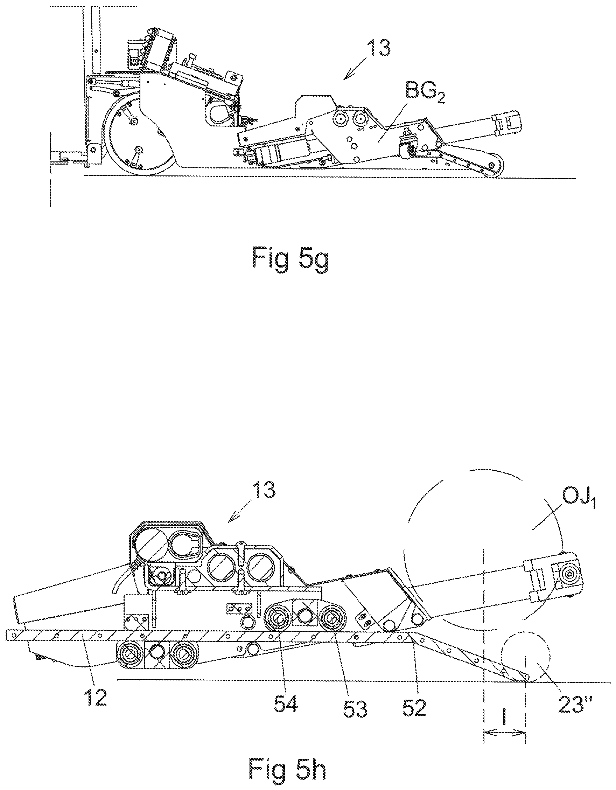

Figure 5g shows the bed transporter in a transportation position. The pull cart 13 has been pulled further rearward and further angled the lateral end piece BG₂, the object having been further tipped upward.

Figure 5h shows a corresponding section according to Figure 5c in the transportation position according to Figure 5g. The two front track wheels 53, 54 have passed the knee 52 in the track and the upward angling of the lateral end piece BG₁ is terminated. As seen in the figure, the pull cart has been displaced further rearward in relation to the position shown in Figure 5f. The object wheel OJ₁ and thereby the object, possibly the patient bed, has been pulled toward the driving wheels of the transporter and thereby considerably decreased the length of the carriage. As seen in the figure, the centre of the object wheel OJ₁ has a position behind the centre of the drawn front supporting wheel 23" with the distance "I". The track wheels of the pull cart 13 are now contacting horizontal parts of the movement track 12. Upon a continued displacement of the pull cart 13 rearward along the slide track 12, a further shortening of the total length of the carriage is obtained, which is of great importance to its manoeuvring in narrow spaces.

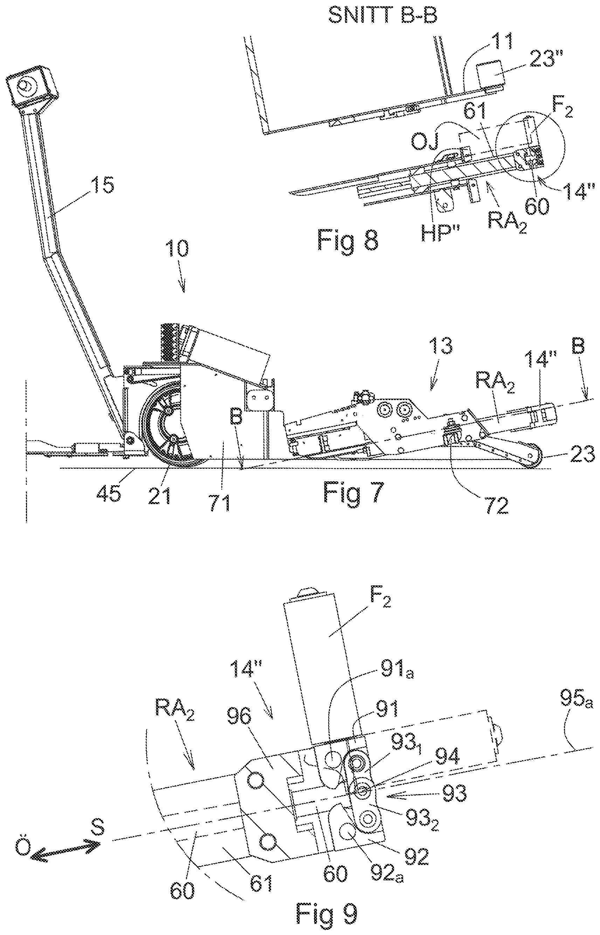

Figure 6 shows a section D-D through a lateral end piece BG₂, a mechanism for the regulation of a finger's movement comprising an axially displaceable and spring-loaded inner operating rod 60 which by an axial movement effects opening and closure of the wheel fixing devices 14". In the embodiment illustrated, the wheel fixing devices are closed by a forwardly directed movement of the inner operating rod 60, which is displaced in relation to an outer operating rod 61. The operating rod actuates a toggle joint mechanism 62 to spread and thereby rotate one or two fingers from a forwardly pointing position to a transverse position. This is shown more in detail in Figure 9.

For these axial X-movements of the operating rods 60, 61, a linear motor is coupled to the lateral end piece and to the outer operating rod 61 via an attachment. In the front end of the outer operating rod 61, an operating rod housing 96 is fitted in place. The inner operating rod 60 is spring-loaded by a compression spring, which makes that the same follows the outer operating rod 61. When a stop block connected to the inner operating rod 60 reaches a slide bearing, the movement of the inner operating rod 60 ceases but the outer operating rod 61 continues somewhat further. The movement difference between the inner operating rod 60 and the outer operating rod 61 opens the finger. In the embodiments shown in the figures, the operating rods are shown as inner and outer operating rods, but other embodiments wherein the operating rods are placed beside each other are also comprised by the invention.

Upon closure, said corresponding movements take place backward. First only movement of the outer operating rod 61 and after that also the inner operating rod 60.

Figure 7 shows the transporter 10 from the side in a position where the pull cart 13 has been displaced rearward along the movement track so that the wheel fixing devices 14', 14", fitted to the movement device RA₂, have been lifted from their grip position. The operating arm 15 is put in its maximally lowered position, which involves that the transporter is in manoeuvring position. The driving wheel 21 is a slightly turned and partly hidden by a cover plate 71. The pull cart 13 is on both sides of the transporter 10 provided with a front castor 72, which in the figure is lifted from the substratum 45 and thereby is not active. When the pull cart is in its foremost position at the gripping of the object wheel of an object, these front castors 72 are pressed against the substratum 45, the front supporting wheels 23 being lifted from contacting the substratum, which means that the alignment of the transporter 10 with the object wheel of an object is considerably facilitated by the fact that the front end of the transporter 10 also can be laterally moved. An alternative to these castors is to replace the same by transverse wheels mounted on longitudinal shafts which lift the front part of the chassis to facilitate lateral movement upon gripping of the bed wheels.

Figure 8 shows in a section B-B the closed wheel fixing device 14" with its transverse finger F₂ connected to the movement device RA₂. In the figure, an imaginary object wheel OJ is also shown by dashed lines and its position between the chassis 11 with the front supporting wheel 23" thereof and the inside of the movement device RA₂. The object wheel OJ has been pressed against the inward situated part of the heel plate HP" by the fact that the entire movement device RA₂ has been displaced in the X-direction after the inner operating rod 60 of the movement device RA₂ has been displaced in relation to the outer operating rod 61 thereof and thereby closed the wheel fixing device 14".

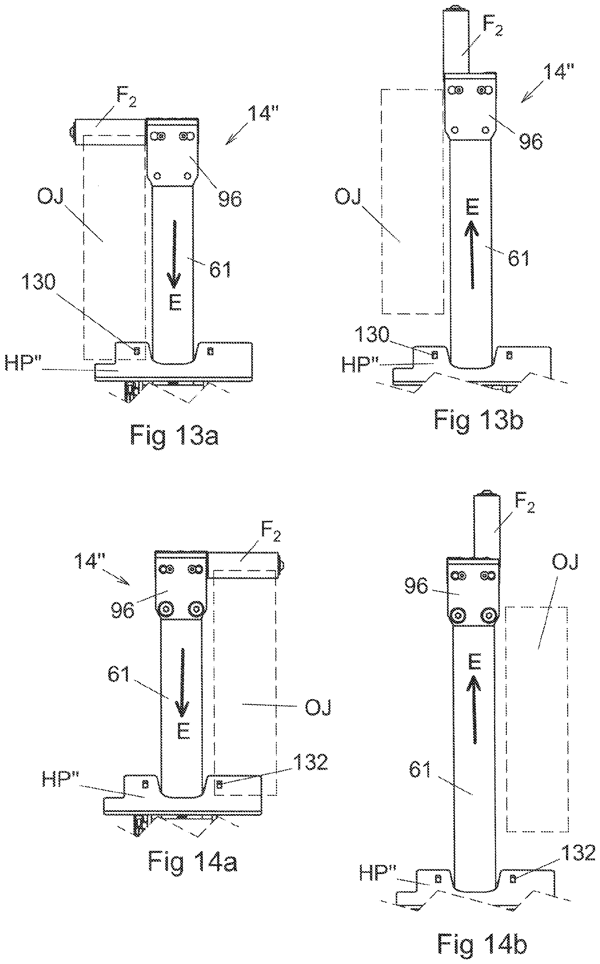

Figure 9 shows in enlargement the closed wheel fixing device 14" with its transverse finger F₂. For the closure and opening of the wheel fixing device 14", the finger F₂ is fitted to a rotatably movable first pivot seat 91 mounted for rotation on a first seat shaft 91ₐ corresponding to the bearing shaft L₂ in Figure 1. In the wheel fixing device 14", a second rotatable pivot seat 92 is also fitted and mounted for rotation on a second seat shaft 92ₐ. To this second pivot seat 92, another finger can be connected and in the figure shown oppositely directed if a double closure function is desired in this embodiment, which is shown in Figures 11 and 12. Between the two pivot seats 91, 92, a toggle joint 93 comprising two jointed link levers 93₁, 93₂ is interconnected in a centre joint 94. Inside the movement device RA₂ comprising an operating rod housing 96, an axial inner operating rod 60, movable along an imaginary operating shaft 95ₐ, is fitted. In its front end, the inner operating rod 60 is connected to the centre joint 94 of the toggle joint 93. In the position shown, the inner operating rod 60 is displaced to its front position S and the toggle joint 93 has then been straightened out to the position shown and the finger/fingers has/have thereby been placed crossways. As an extra safety, the toggle joint 93 may be bent further in the S-direction to an "overbent" angle position in relation to the position shown in the figure, which means that forces on the fingers from the object wheel cannot "open" the finger. The inner operating rod 60 is spring-loaded, which gives a force guaranteeing that the "overbent" angle position of the toggle joint 93 remains. Upon a displacement of the inner operating rod 60 rearward toward a position O, the toggle joint 93 is bent and the pivot seats 91, 92 and thereby the finger/fingers is/are angled to a forwardly directed position according to the dashed lines. The embodiment shown in the figure also allows an alternative position of the operating rod housing 96 together with the outer and the inner operating rod 61, 60 by the fact that this using a simple hand grip can be loosened, rotated 180° on the operating shaft 95ₐ to point downward in the figure instead of upward as well as be fixed so as to, in such an alternative position, allow gripping of object wheels from the inside, which is shown in Figures 14a and 14b. An alternative to said fixation may consist of the gravitation only.

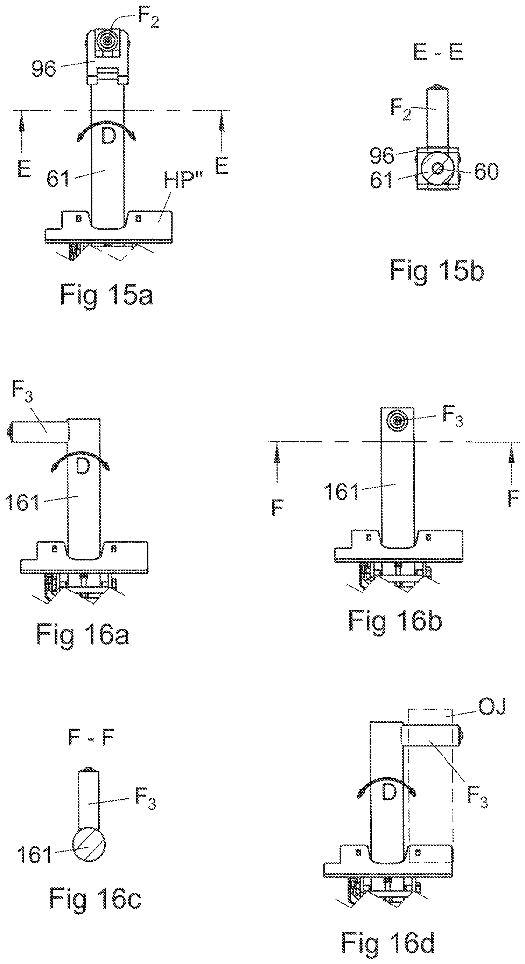

In an alternative embodiment according to Figure 9, the movement of the finger F₂ between the closed position according to the figure and an open position is effected by the wheel fixing device 14" being rotated 90° on the operating shaft 95ₐ to point vertically instead of laterally, which is shown in Figures 15a and 15b.

Figure 10 shows the embodiment according to Figure 9 with the finger in an open position with the movements available for the movement device RA₂ in the transporter so as to, in different embodiments of the wheel fixing device 14", move the finger, for instance between a closed position and an open position. The figure shows the embodiment according to Figure 9 where the movement to effect the angular movement A of the finger is obtained by an axial movement B of the inner operating rod 60 in relation to the outer operating rod 61 between closed position S and open position O. Under Figure 9, there are also indicated further embodiments of the wheel fixing device. Such further embodiments for the closure and opening of the finger of a wheel fixing device are manoeuvred by the movements that comprise a rotary movement C of the inner operating rod 60 and/or a rotary movement D of the outer operating rod 61 of the movement device RA₂ with the operating rod housing 96 thereof. The movements may be separate or combined for the movements of the finger. The finger movement in Figure 9 takes place according to Figure 10 between 90° and 180°. If the finger is placed in the second pivot seat, the finger movements take place between 0° and 90° and we obtain another embodiment. In addition, the wheel fixing device 14" has a movement E of the operating rod housing 96 so as to, in closed position of the finger, provide a pressing movement between a pressed position P and a released position F of an object wheel against an abutment means, for instance a heel plate.

In the following, more clear examples are shown of different embodiments within the scope of the invention for the opening, closure, and displacement of a wheel fixing device with the available movements according to Figure 10.

Figure 11 shows a wheel fixing device 14" of the type described under Figure 9 having a first finger F₂₁ but which wheel fixing device 14" has been supplemented with another finger F₂₂ fitted to the second pivot seat 92, according to Figure 9. Said another finger can be closed in the opposite direction in relation to the first finger F₂₁ and a transporter having such a wheel fixing device 14" can grip object wheels laterally from outside as well as from inside by a movement transfer device RA₂ of the same design as previously described. Thus, the inner operating rod 60 is displaced to closed position S in relation to the outer operating rod 61 according to the arrow in the figure, which movement corresponds to movement B.

Figure 12 shows the embodiment shown in Figure 11 in open position with the first finger F₂₁ and the second finger F₂₂ in parallel position. With reference to Figure 10, these finger movements are provided from closed position S to open position Ö by the axial movement B of the inner operating rod 60 in relation to the outer operating rod 61.

Figures 13a and 13b show a wheel fixing device 14" according to the embodiment according to Figure 9 and in Figure 13a, the finger F₂ is shown in closed position. An object wheel OJ gripped from the outside has been pressed by the movement E of the outer operating rod 61 and the operating rod housing 96, see also Figure 10, against a signal sensor 130 in the heel plate HP" and been given a signal to a driver of the transporter that the object is ready to be lifted.

Figure 13b shows that the finger F₂ has been opened after the outer operating rod 61 and the operating rod housing 96 have been displaced forward by the movement E according to the arrow, the object wheel OJ having been released and the signal sensor 130 in the heel plate HP" deactivated and the transporter can be removed from the object.

Figures 14a and 14b show an alternative embodiment of the wheel fixing device 14" according to Figures 13a and 13b by the outer operating rod 61 and the operating rod housing 96 having been rotated 180° in relation to the heel plate HP" and gripping of an object wheel having been made possible from the inside. Figure 14a shows that the finger F₂ has pressed a gripped object wheel OJ has in a corresponding way by the movement E of the outer operating rod 61 and the operating rod housing 96 against a second signal sensor 132 in the heel plate HP" and been given signal to a driver of the transporter that the object is ready to be lifted.

Figure 14b shows correspondingly that the finger F₂ has been opened after the outer operating rod 61 and the operating rod housing 96 have been displaced forward by the movement E according to the arrow, wherein the object wheel OJ has been released from the signal sensor 132 in the heel plate HP" and the transporter can be removed from the object.

Opening and closure of the finger/fingers takes place as previously has been shown with an axial movement of the inner operating rod.

Alternative designs of the signal sensor/signal sensors are that behind each angularly movable heel plate there is only one signal sensor, which is activated upon pressing of an object wheel.

A further alternative design of the signal sensor is that the same is placed in or adjacent to the finger instead of adjacent to the heel plate.

Figures 15a shows an alternative finger opening of the embodiment according to Figure 13a where the embodiment according to Figure 15a shows the finger F₂ in open position, this open position from the closed position shown in Figure 13a having been obtained by the outer operating rod 61 and the operating rod housing 96 by the movement D having been rotated 90° in relation to the heel plate HP" so that the finger points upward instead of forward as in Figure 13b. Gripping of an object wheel can take place either from inside or from outside depending on the rotational movement D which may be in the range of 0° to 180° with 90° between closed and open position.

Figure 15b shows a section E-E through the outer operating rod 61, the inner operating rod 60, and the operating rod housing 96, the finger F₂ being shown in open position where also the inner operating rod 60 for the alternative finger movement is placed in the operating rod housing 96.

By combining the movements B and D according to Figure 10, a movement is obtained having an elliptical path for the finger between closed and open position which is obtained in the embodiment according to Figures 15a-b if the movement D is combined with the axial movement B of the inner operating rod 60.

Figures 16a-d show an alternative design of the movable finger F₃, which has a movement pattern identical to the movement in Figure 15a but instead of being movable in relation to the operating rod housing, the finger is rigidly connected with a rotational shaft 161 corresponding to the outer operating rod 61 in previously shown embodiments. The finger movement between closed and open position is made by the movement D according to what has previously been described. Figure 16a shows the position of the finger F₃ in closed position.

Figure 16b shows the finger F₃ in open position, the rotational shaft 161 having been rotated 90° in relation to the position in Figure 16a.

Figure 16c shows in the section F-F the finger F₃ in open position and the rotational shaft 161 sectioned. As seen in Figure 16c, the construction of the finger manoeuvring is considerably simpler than in previously shown embodiments since only one fixedly angled finger F₃ is arranged on a rotatable shaft.

Figure 16d shows a corresponding embodiment wherein the rotation D between open and closed position of the finger F₃ takes place between 90° to 180°, which involves a gripping of an object wheel OJ, indicated by dashed lines in the figure, from opposite side in relation to the gripping in Figure 16a.

The movements to and from the heel plate and the signalling takes place in the same way for these embodiments according to Figures 15a-b and 16a-d as the movements and the signalling shown and described under Figures 13a-b and 14a-b.

Embodiments having double transverse fingers according to what has been shown in Figure 11 can naturally be rotated 90° according to the movement pattern in Figure 15a between open and closed position and have the option to gripping both from inside and from outside. Preferably but not necessarily, such fingers are made fixed in relation to the rotational shaft.

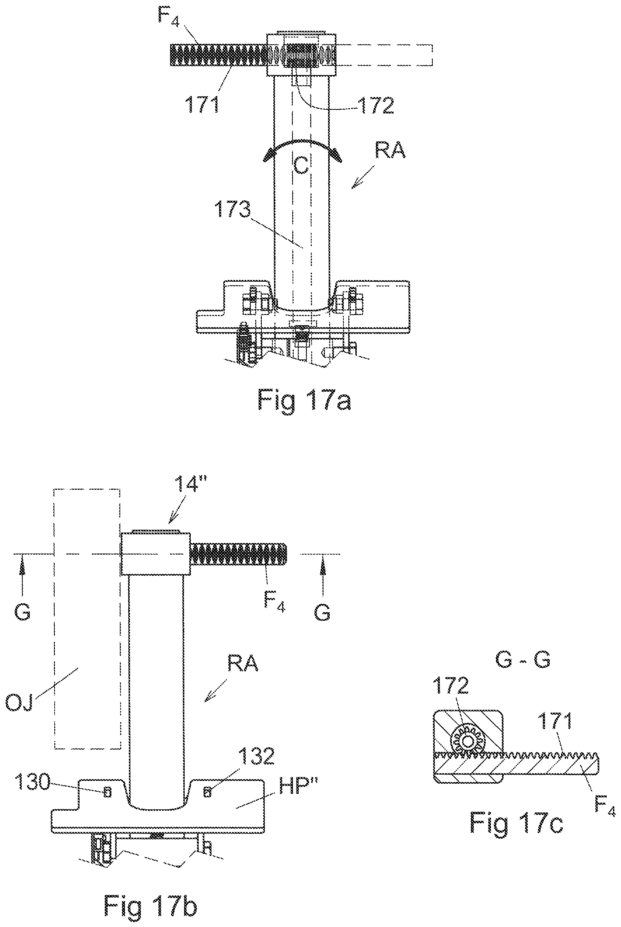

Figures 17a-c show a further embodiment of a movable finger F₄ according to the invention. Figure 17a shows that the finger F₄ is located axially mounted and movable in a movement device RA. The finger F₄ is provided with a rack 171, which is in tooth engagement with a gearwheel 172 for driving the finger F₄ by the rack 171 between a first outer position shown in Figure 17a and a second outer position where the second outer position is indicated by dashed lines in the figure. The gearwheel 172 is connected to a drive shaft 173, which corresponds to the previously shown axially movable inner operating rod, but which instead is rotatable by means of an electric motor. Thus, in this embodiment, the finger is closed on one side but open on the other side of the movement device. When the finger is manoeuvred to open position on one side, the finger will simultaneously be moved to closed position on the other side of the movement device. Thus, this embodiment affords the choice of lateral gripping either from the inside or from the outside by manoeuvring of the finger position. The movement that is used for this finger movement is the movement C according to Figure 10.

Figure 17b shows the movement device RA with the heel plate HP" of similar design as previously has been shown. The previously described finger movements in the X-direction in relation to the heel plate HP" and the respective signal sensor 130, 132 are formed in the same way also in this embodiment. The finger F₄ is shown in the figure in its second outer position, wheel fixing device 14" having been opened from its first outer position and has released an object wheel OJ.

Figure 17c shows in the section G-G the integrated rack 171 of the finger F₄ in tooth engagement with the gearwheel 172 which during rotation in a first direction of rotation drives the finger in one direction and in a second direction of rotation drives the finger in the opposite direction.

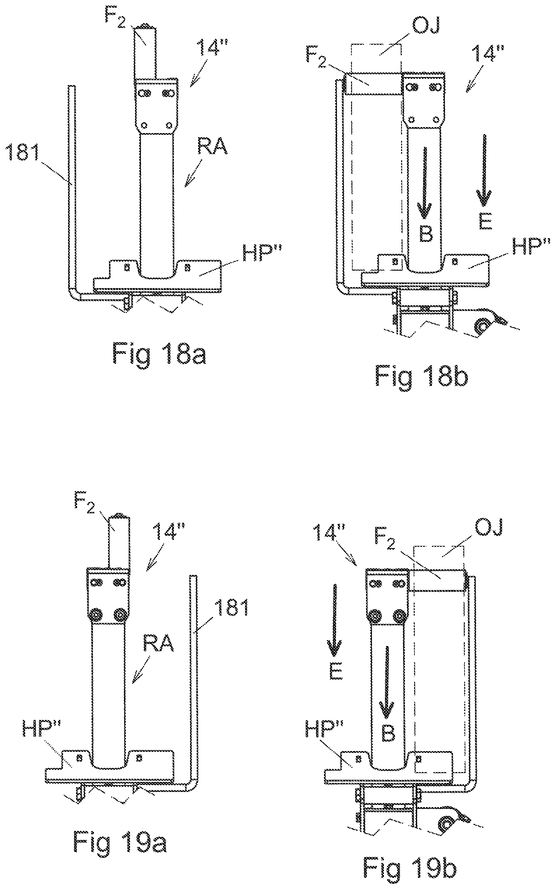

Figure 18a shows an embodiment having the wheel fixing device 14" with the finger F₂ thereof in open position. The wheel fixing device 14" is provided with a lateral support 181 fitted in the connection to the heel plate HP", the wheel fixing device 14" being aligned with an object wheel which can be inserted between the lateral support and the movement device RA.

Figure 18b shows the wheel fixing device 14" according to Figure 18a having the finger F₂ of the device in closed position with a gripped object wheel OJ. The closure of the finger is made by the movement B according to what has previously been described and furthermore a pressing movement E may press the object wheel OJ against the heel plate HP" and its signal sensor such as previously has been described.

Figure 19a shows an alternative embodiment to Figure 18a where the movement device RA with the wheel fixing device 14" together with the lateral support 181 has been rotated 180° on the shaft of the movement device so that the finger F₂ has ended up on the opposite side and an alternative grip position has been obtained. This grip position may also be obtained in a corresponding embodiment without said 180°-rotation if the finger is fitted to the second pivot seat according to what has previously been described and the lateral support is fitted on the other side. The heel plate HP" is situated in the same position as previously has been shown in Figure 18a. The embodiment also comprises possibility of remounting the heel plate to the other side of the movement device.

Figure 19b shows the corresponding movements and positions which have been shown in Figure 18b, namely that the wheel fixing device 14" according to Figure 19a with the finger F₂ thereof has been closed by the movement B for gripping an object wheel OJ. Correspondingly, a pressing movement E may press the object wheel OJ against the heel plate HP" and its signal sensor according to what has previously been described.

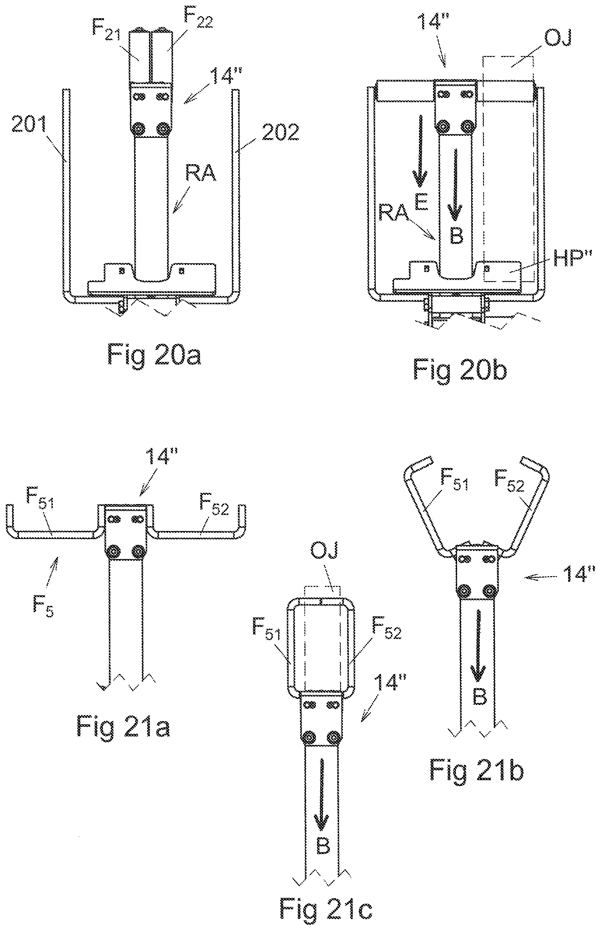

The manoeuvring of the finger according to the embodiments in Figures 18a-b and 19a-b is effected by the previously shown axial displacement of the inner operating rod. An alternative to this finger manoeuvring according to these figures is that the finger is put in lateral position and that the entire operating rod housing is rotated 90° according to Figures 15a-b and 16a-d. In such an embodiment of the manoeuvring of the finger, the embodiment according to Figures 20a-b may be made with a transverse single finger that can be rotated 180° between closed position on one side, an open intermediate position, and a closed position on the other side.

The embodiments according to the above having the lateral support for gripping from behind may also be combined with any one of previously shown embodiments with gripping from the side of one and the same movement device or of each a movement device.

Figure 20a shows a further embodiment of a wheel fixing device 14" provided with two fingers F₂₁, F₂₂, which are manoeuvred between opening and closure in the same way as has been shown in Figures 11 and 12. The figure shows the fingers in open position with possibility of gripping object wheels from behind on either side of the movement device RA of the wheel fixing device 14". The wheel fixing device 14" according to this embodiment is provided with a first lateral support 201 and a second lateral support 202.

Figure 20b shows the wheel fixing device 14" in closed position by the movement B of the inner operating rod with a gripped object wheel OJ on one side of the movement device RA. In the same way as previously has been described, a movement E of the outer operating rod can effect a pressing against the heel plate HP" and its signal sensor.

An alternative to this finger manoeuvring according to Figures 20a, 20b is that the finger is put in lateral position or fixed in a lateral position and that the entire operating rod housing is rotated 90° between open and closed position according to what has previously been described.

Figure 21a shows a further embodiment of the wheel fixing device 14", which is provided with another type of fingers F₅₁, F₅₂, which by a similar axial movement as has been described above are manoeuvred between an open position according to the figure to a closed position for gripping an object wheel. This type of fingers F₅ is each one shaped with a C-shape or L-shape and fitted in a respective pivot seat of the type which previously has been described, the location of the fingers F₅ being opposite each other for allowing a containment of an object wheel.

Figure 21b shows the fingers F₅₁, F₅₂ of the wheel fixing device 14" according to the embodiment in Figure 21a in a half closed position when the inner operating rod has been axially displaced according to the movement B which previously has been described.

Figure 21c shows the fingers F₅₁, F₅₂ of the wheel fixing device 14" according to the embodiment in Figure 21a in an entirely closed position when the inner operating rod has been displaced further according to the movement B. In this connection, an object wheel OJ has been gripped by the wheel fixing device 14".

Modification of the embodiment according to Figures 21 a-c comprises that the wheel fixing device may consist of only one finger gripping around the object wheel. This finger may be placed on either one side or on the other side of the wheel fixing device. Also previously indicated embodiments wherein the movement device is rotated 180° are comprised by this embodiment according to the invention.

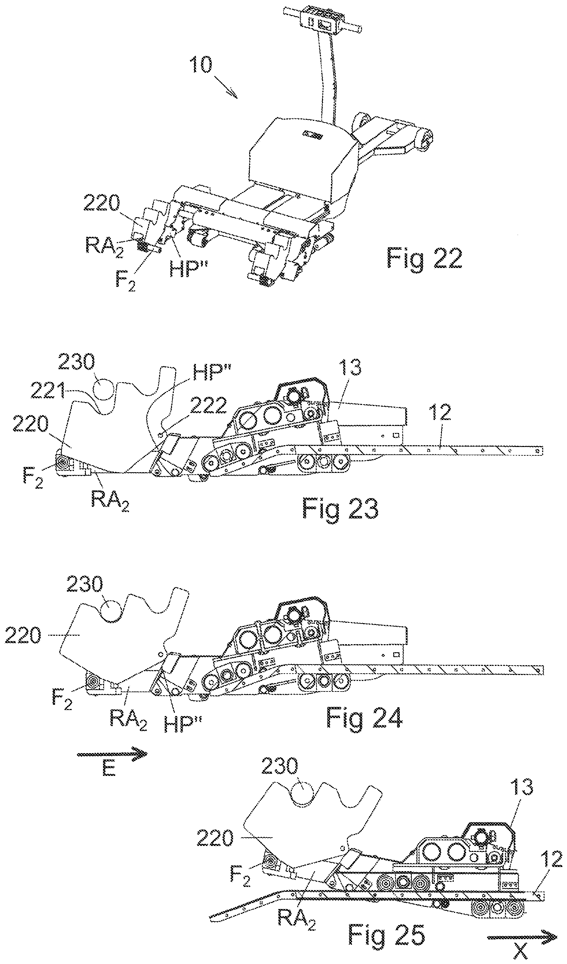

Figure 22 shows a further embodiment of a supplementing gripper 220 of a transporter 10 having wheel fixing devices as has been described above. The gripper 220 is formed as a separate detail, which is laid over the movement device RA₂ between the transverse finger F₂ and the heel plate HP". This gripper 220 may also be fitted to a pivotable arm movable in and out from an active position.

Figure 23 shows the gripper 220 according to Figure 22 in a lower position when the pull cart 13 is situated in its front position in relation to the movement track 12 and the movement device RA₂ with the finger F₂ is in a projected closed position. The gripper 220 is oriented with a first grip recess 221 under a transverse frame part 230 of an object, for instance a patient bed. The gripper 220 is rotatably movable in relation to the movement device RA₂ around a gripper mounting 222 adjacent to the heel plate HP".

Figure 24 shows the gripper 220 according to Figure 22 in a gripped position when the movement device RA₂ with the finger F₂ has moved toward the heel plate HP" and thereby pressed/angled up the gripper 220 into engagement with the frame part 230. The movement E of the movement device toward the heel plate is the same movement as has been shown above, for instance, under Figure 10.

Figure 25 shows the gripper 220 according to Figure 22 in a lifted position. The lifting of the frame part 230 takes place correspondingly as has been shown above under Figures 5d, 5f, and 5h by the pull cart 13 being displaced in the X-direction along the movement track 12, wherein the movement device RA₂ with the finger F₂ lifts the gripper 220 and thereby the frame part 230.

It should be mentioned that the detailed solutions described in the figures may be varied to the corresponding function within the scope of the invention as defined by the appended claims and that the figures shown only are schematic to illustrate possible embodiments within the scope of a transporter according to the invention.

## Claims

1. Transporter (10) comprising a chassis (11) on which at least one rear driving wheel (21) driven by a driving motor (22) is connected to the chassis (11) on which chassis (11) at least one front supporting wheel (23', 23") is directly or indirectly fitted, the transporter (10) comprising at least one wheel fixing device (14'), designed to grip one or more object wheels of an object, for instance a patient bed, transportable by the transporter (10) on a substratum (45), which wheel fixing device (14') is fitted in the front end of a movement device (RA) connected to the chassis (11), which wheel fixing device (14') is formed with at least one elongate finger (F₁, F₂, F₃, F₄, F₅) movable between an open position and a closed position by a movement of the movement device (RA) in a Z-direction, so as to, in the closed position, bring the wheel fixing device (14') to a lifting movement, between a vertical lower grip level and a vertical higher elevation level and thereby subject contained object wheels to a lifting and to a possible further move of the object by the transporter (10),
said finger (F₁, F₂, F₃, F₄, F₅),
either is provided with a movable end and an end mounted in the movement device (RA) on a bearing shaft (L₁, L₂) which finger (F₁, F₂, F₃, F₅) is turnably movable on the bearing shaft in a grip movement from the open position to the closed position, which bearing shaft either is an essentially vertically directed seat shaft (91ₐ, 92ₐ) and/or is directed parallel to an essentially horizontally directed operating shaft (95ₐ),
or that said finger (F₄) is provided with alternating two free ends and axially mounted in the movement device (RA) for an axial movement in the movement device (RA), which finger is movable in the transverse direction between an open position and a closed position alternately on each side of its mounting in the movement device (RA),
which movement device (RA) is movable in a Y-direction for the adaptation of the wheel fixing device (14') to an object wheel, **characterized in that** the transporter (10) with the elongate finger (F₁, F₂, F₃, F₄, F₅) of the transporter (10) is arranged to grip said object wheels laterally in the Y-direction from the outside as well as from within.

2. Transporter according to claim 1, **characterized in that** the grip movement of the finger (F₁, F₂, F₃, F₄, F₅) takes place either in a horizontal plane or in a vertical plane.

3. Transporter according to claim 1, **characterized in that** in the case where said finger (F₁, F₂) is provided with a movable end and an end mounted in the movement device (RA) on a bearing shaft (L₁, L₂) which finger (F₁, F₂, F₃, F₅) is turnably movable on the bearing shaft in a grip movement from the open position to the closed position, which bearing shaft either is an essentially vertically directed seat shaft (91ₐ, 92ₐ) and/or is directed parallel to an essentially horizontally directed operating shaft (95ₐ), an operating rod (60) is connected to said finger (F₁, F₂) and axially displaceable along the operating shaft (95ₐ) to hold, in a first axial position, said finger (F₁, F₂) in its open position and to hold, in a second axial position, said finger (F₁, F₂) in its closed position.

4. Transporter according to any one of the preceding claims, **characterized in that** the driving wheel (21) is rotatably movable on a swivel shaft (63), wherein said swivel shaft (63) forms an angle in the range of 5-45°, preferably 15-35°, and most suitably 20°, with a vertical axis through the centre of rotation of the driving wheel (21) to provide a torque on the driving wheel (21) for the reversal toward a centre position upon the forward movement of the transporter (10).

5. Transporter according to claim 4, **characterized in that** the centre of rotation of the driving wheel (21) is situated offset in the horizontal direction in relation to the swivel shaft (63).

6. Transporter according to any one of claims 1-5, **characterized in that** the movement device (RA) with the wheel fixing device (14') is fitted to a movable pull cart (13) on the transporter (10) to effect said lifting movement and thereby a move of the wheel fixing device (14') in relation to the chassis (11) of the transporter (10) between said lower grip level and said higher elevation level.

7. Transporter according to any one of claims 1-6, **characterized in that** said movement device (RA) is arranged to be displaced along a movement track (12), which at least partly extends between on one hand a vertical lower grip level, on which the wheel fixing devices (14', 14") from a detached position from an object wheel to a gripped position towards an object wheel can grip said object wheels and from a gripped position towards an object wheel to a detached position from an object wheel can release said object wheels, and on the other hand a vertical higher elevation level on which the wheel fixing devices (14', 14") are continuously gripping towards the object wheel.

## Patentansprüche

1. Transporteinrichtung (10), umfassend ein Chassis (11), an der mindestens ein hinteres Antriebsrad (21), das durch einen Antriebsmotor (22) angetrieben wird, mit dem Chassis (11) verbunden ist, wobei an dem Chassis (11) mindestens ein vorderes Stützrad (23', 23") direkt oder indirekt befestigt ist, wobei die Transporteinrichtung (10) mindestens eine Radbefestigungsvorrichtung (14') umfasst, die dazu ausgelegt ist, ein oder mehrere Objekträder eines Objekts, zum Beispiel eines Patientenbetts, zu greifen, das durch die Transporteinrichtung (10) auf einer Unterlage (45) transportierbar ist, wobei die Radbefestigungsvorrichtung (14') in dem vorderen Ende einer Bewegungsvorrichtung (RA) befestigt ist, die mit dem Chassis (11) verbunden ist, wobei die Radbefestigungsvorrichtung (14') mit mindestens einem länglichen Finger (F₁, F₂, F₃, F₄, F₅) ausgebildet ist, der zwischen einer geöffneten Position und einer geschlossenen Position durch eine Bewegung der Bewegungsvorrichtung (RA) in einer Z-Richtung bewegbar ist, um in der geschlossenen Position die Radbefestigungsvorrichtung (14') in eine Hebebewegung zwischen einem vertikalen unteren Greifniveau und einem vertikalen höheren Anhebungsniveau zu versetzen und dadurch aufgenommene Objekträder einem Heben und einer möglichen weiteren Bewegung des Objekts durch die Transporteinrichtung (10) zu unterziehen,
wobei der Finger (F₁, F₂, F₃, F₄, F₅)
entweder mit einem bewegbaren Ende und einem Ende, das in der Bewegungsvorrichtung (RA) auf einer Lagerwelle (L₁, L₂) gelagert ist, bereitgestellt ist, wobei der Finger (F₁, F₂, F₃, F₅) drehend auf der Lagerwelle in einer Greifbewegung von der geöffneten Position zu der geschlossenen Position bewegbar ist, wobei die Lagerwelle entweder eine im Wesentlichen vertikal ausgerichtete Sitzwelle (91ₐ, 92ₐ) ist und/oder parallel zu einer im Wesentlichen horizontal ausgerichteten Betätigungswelle (95ₐ) ausgerichtet ist,
oder dass der Finger (F₄) mit sich abwechselnden zwei freien Enden bereitgestellt ist und axial in der Bewegungsvorrichtung (RA) für eine axiale Bewegung in der Bewegungsvorrichtung (RA) gelagert ist, wobei der Finger in der Querrichtung zwischen einer geöffneten Position und einer geschlossenen Position abwechselnd auf jeder Seite seiner Lagerung in der Bewegungsvorrichtung (RA) bewegbar ist,
wobei die Bewegungsvorrichtung (RA) in einer Y-Richtung zur Anpassung der Radbefestigungsvorrichtung (14') an ein Objektrad bewegbar ist, **dadurch gekennzeichnet, dass** die Transporteinrichtung (10) mit dem länglichen Finger (F₁, F₂, F₃, F₄, F₅) der Transporteinrichtung (10) dazu angeordnet ist, die Objekträder lateral in der Y-Richtung von der Außenseite sowie von innen zu greifen.

2. Transporteinrichtung nach Anspruch 1, **dadurch gekennzeichnet, dass** die Greifbewegung des Fingers (F₁, F₂, F₃, F₄, F₅) entweder in einer horizontalen Ebene oder in einer vertikalen Ebene stattfindet.

3. Transporteinrichtung nach Anspruch 1, **dadurch gekennzeichnet, dass** in dem Fall, dass der Finger (F₁, F₂) mit einem bewegbaren Ende und einem Ende, das in der Bewegungsvorrichtung (RA) auf einer Lagerwelle (L₁, L₂) gelagert ist, bereitgestellt ist, wobei der Finger (F₁, F₂, F₃, F₅) drehbar auf der Lagerwelle in einer Greifbewegung von der geöffneten Position zu der geschlossenen Position bewegbar ist, wobei die Lagerwelle entweder eine im Wesentlichen vertikal ausgerichtete Sitzwelle (91ₐ, 92ₐ) ist und/oder parallel zu einer im Wesentlichen horizontal ausgerichteten Betätigungswelle (95ₐ) ausgerichtet ist, eine Betätigungsstange (60) mit dem Finger (F₁, F₂) verbunden und entlang der Betätigungswelle (95ₐ) axial verschiebbar ist, um in einer ersten axialen Position den Finger (F₁, F₂) in seiner geöffneten Position zu halten und in einer zweiten axialen Position den Finger (F₁, F₂) in seiner geschlossenen Position zu halten.

4. Transporteinrichtung nach einem der vorhergehenden Ansprüche, **dadurch gekennzeichnet, dass** das Antriebsrad (21) drehbar auf einer Schwenkwelle (63) bewegbar ist, wobei die Schwenkwelle (63) einen Winkel im Bereich von 5-45°, vorzugsweise 15-35°, und am besten geeignet 20°, mit einer vertikalen Achse durch den Drehmittelpunkt des Antriebsrads (21) ausbildet, um ein Drehmoment auf das Antriebsrad (21) zur Umkehr hin zu einer Mittelposition bei der Vorwärtsbewegung der Transporteinrichtung (10) bereitzustellen.

5. Transporteinrichtung nach Anspruch 4, **dadurch gekennzeichnet, dass** der Drehmittelpunkt des Antriebsrads (21) in der horizontalen Richtung in Relation zu der Schwenkwelle (63) versetzt angeordnet ist.

6. Transporteinrichtung nach einem der Ansprüche 1-5, **dadurch gekennzeichnet, dass** die Bewegungsvorrichtung (RA) mit der Radbefestigungsvorrichtung (14') an einem bewegbaren Ziehwagen (13) an der Transporteinrichtung (10) befestigt ist, um die Hebebewegung und dadurch eine Bewegung der Radbefestigungsvorrichtung (14') in Relation zu dem Chassis (11) der Transporteinrichtung (10) zwischen dem unteren Greifniveau und dem höheren Anhebungsniveau auszuführen.

7. Transporteinrichtung nach einem der Ansprüche 1-6, **dadurch gekennzeichnet, dass** die Bewegungsvorrichtung (RA) dazu angeordnet ist, entlang einer Bewegungsbahn (12) versetzt zu werden, die sich zumindest teilweise zwischen einerseits einem vertikalen unteren Greifniveau, auf dem die Radbefestigungsvorrichtungen (14', 14") von einer von einem Objektrad gelösten Position zu einer Greifposition hin zu dem Objektrad die Objekträder greifen kann und von einer Greifposition hin zu dem Objektrad zu einer von einem Objektrad gelösten Position die Objekträder freigeben kann, und andererseits einem vertikalen höheren Anhebungsniveau, auf dem die Radbefestigungsvorrichtungen (14', 14") kontinuierlich hin zu dem Objektrad greifen, erstreckt.

## Revendications

1. Dispositif de transport (10) comprenant un châssis (11) sur lequel au moins une roue d'entraînement arrière (21) entraînée par un moteur d'entraînement (22) est raccordée au châssis (11), au moins une roue de support avant (23', 23") étant adaptée, directement ou indirectement, sur ledit châssis (11), le dispositif de transport (10) comprenant au moins un dispositif de fixation de roue (14'), conçu pour entrer en prise avec une ou plusieurs roues d'objet d'un objet, par exemple un lit de patient, propre à être transporté par le dispositif de transport (10) sur un substrat (45), ledit dispositif de fixation de roue (14') étant adapté dans l'extrémité avant d'un dispositif de déplacement (RA) raccordé au châssis (11), ledit dispositif de fixation de roue (14') étant formé avec au moins un doigt allongé (F₁, F₂, F₃, F₄, F₅) déplaçable entre une position ouverte et une position fermée par un mouvement du dispositif de déplacement (RA) dans une direction Z, de façon à, dans la position fermée, amener le dispositif de fixation de roue (14') à effectuer un mouvement de soulèvement, entre un niveau d'entrée en prise vertical inférieur et un niveau d'élévation vertical supérieur et à soumettre ainsi des roues d'objet en prise à un soulèvement et à un déplacement supplémentaire possible de l'objet par le dispositif de transport (10),
ledit doigt (F₁, F₂, F₃, F₄, F₅)
étant pourvu d'une extrémité mobile et d'une extrémité fixée dans le dispositif de déplacement (RA) sur un arbre porteur (L₁, L₂), ledit doigt (F₁, F₂, F₃, F₅) étant mobile par rotation sur l'arbre porteur dans un mouvement d'entrée en prise de la position ouverte à la position fermée, ledit arbre porteur étant un arbre d'appui orienté essentiellement verticalement (91ₐ, 91_{b}) et/ou étant orienté parallèlement à un arbre de commande orienté essentiellement horizontalement (95ₐ), ou
ledit doigt (F4) étant pourvu de deux extrémités libres alternantes et fixées axialement dans le dispositif de déplacement (RA) en vue d'un déplacement axial dans le dispositif de déplacement (RA), ledit doigt étant déplaçable dans la direction transversale entre une position ouverte et une position fermée en alternance de chaque côté de sa fixation dans le dispositif de déplacement (RA),
ledit dispositif de déplacement (RA) étant déplaçable dans une direction Y pour l'adaptation du dispositif de fixation de roue (14') à une roue d'objet, **caractérisé en ce que** le dispositif de transport (10) avec le doigt allongé (F₁, F₂, F₃, F₄, F₅) du dispositif de transport (10) est prévu pour entrer en prise avec lesdites roues d'objet latéralement dans la direction Y depuis l'extérieur ainsi que depuis l'intérieur.

2. Dispositif de transport selon la revendication 1, **caractérisé en ce que** le mouvement d'entrée en prise du doigt (F₁, F₂, F₃, F₄, F₅) se produit soit dans un plan horizontal, soit dans un plan vertical.

3. Dispositif de transport selon la revendication 1, **caractérisé en ce que**, dans le cas dans lequel ledit doigt (F₁, F₂) est pourvu d'une extrémité mobile et d'une extrémité fixée dans le dispositif de déplacement (RA) sur un arbre porteur (L₁, L₂), ledit doigt (F₁, F₂, F₃, F₅) étant déplaçable par rotation sur l'arbre porteur dans un mouvement d'entrée en prise de la position ouverte à la position fermée, ledit arbre porteur étant un arbre d'appui orienté essentiellement verticalement (91ₐ, 91_{b}) et/ou étant orienté parallèlement à un arbre de commande orienté essentiellement horizontalement (95ₐ), une tige de commande (60) est raccordée audit doigt (F₁, F₂) et déplaçable axialement le long de l'arbre de commande (95ₐ) afin de maintenir, dans une première position axiale, ledit doigt (F₁, F₂) dans sa position ouverte et afin de maintenir, dans une seconde position axiale, ledit doigt (F₁, F₂) dans sa position fermée.

4. Dispositif de transport selon l'une quelconque des revendications précédentes, **caractérisé en ce que** la roue d'entraînement (21) est mobile par rotation sur un arbre de pivotement (63), ledit arbre de pivotement (63) formant un angle compris entre 5 et 45°, de préférence compris entre 15 et 35°, et idéalement de 20°, avec un axe vertical traversant le centre de rotation de la roue d'entraînement (21) afin produire un couple sur la roue d'entraînement (21) à des fins de retour à une position centrale à la suite du déplacement en avant du dispositif de transport (10).

5. Dispositif de transport selon la revendication 4, **caractérisé en ce que** le centre de rotation de la roue d'entraînement (21) est décalé dans la direction horizontale relativement à l'arbre de pivotement (63).

6. Dispositif de transport selon l'une quelconque des revendications 1 à 5, **caractérisé en ce que** le dispositif de déplacement (RA) avec le dispositif de fixation de roue (14') est adapté à un chariot de traction mobile (13) sur le dispositif de transport (10) afin de réaliser ledit mouvement de soulèvement et ainsi un déplacement du dispositif de fixation de roue (14') relativement au châssis (11) du dispositif de transport (10) entre ledit niveau d'entrée en prise inférieur et ledit niveau d'élévation supérieur.

7. Dispositif de transport selon l'une quelconque des revendications 1 à 6, **caractérisé en ce que** ledit dispositif de déplacement (RA) est prévu pour être déplacé le long d'une voie de déplacement (12), qui s'étend au moins partiellement entre, d'une part, un niveau d'entrée en prise vertical inférieur, auquel les dispositifs de fixation de roue (14', 14"), d'une position détachée vis-à-vis d'une roue d'objet à une position en prise vis-à-vis d'une roue d'objet, peuvent entrer en prise avec lesdites roues d'objet et, d'une position en prise vis-à-vis d'une roue d'objet à une position détachée vis-à-vis d'une roue d'objet, peuvent libérer lesdites roues d'objet et, d'autre part, un niveau d'élévation vertical supérieur, auquel les dispositifs de fixation de roue (14', 14") sont continuellement en prise vis-à-vis de la roue d'objet.
